(19) Europäisches Patentamt / European Patent Office / Office européen des brevets

(11) **EP 4 753 188 A1**

(12) **EUROPEAN PATENT APPLICATION**
published in accordance with Art. 153(4) EPC

(43) Date of publication:
**03.06.2026 Bulletin 2026/23**

(21) Application number: **23949448.7**

(22) Date of filing: **24.08.2023**

(51) International Patent Classification (IPC):
**H04L 1/1812** (2023.01)

(52) Cooperative Patent Classification (CPC):
**H04L 1/1812**

(86) International application number:
**PCT/CN2023/114736**

(87) International publication number:
**WO 2025/039263 (27.02.2025 Gazette 2025/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **HUAWEI TECHNOLOGIES CO., LTD.
Shenzhen 518129 (CN)**

(72) Inventors:
• **ZHANG, Gongzheng**
  **Shenzhen, Guangdong 518129 (CN)**
• **XU, Chen**
  **Shenzhen, Guangdong 518129 (CN)**
• **QIAO, Yunfei**
  **Shenzhen, Guangdong 518129 (CN)**
• **WANG, Jian**
  **Shenzhen, Guangdong 518129 (CN)**
• **LI, Rong**
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION METHOD, AND APPARATUS**

(57) Embodiments of this application provide a communication method and apparatus. The method includes: A first apparatus obtains indication information, where the indication information indicates an enable mode of a first air interface, and the enable mode includes one or more of the following: a non-retransmission enable mode, a retransmission enable mode, or a hybrid automatic repeat request HARQ enable mode. The first apparatus sends first information to a second apparatus based on the indication information. According to embodiments of this application, a waste of resources can be avoided, and transmission efficiency can be improved.

FIG. 7

**Description**

**TECHNICAL FIELD**

This application relates to the field of artificial intelligence technologies, and in particular, to a communication method and apparatus.

**BACKGROUND**

Currently, in a neural network-based transceiver machine, an intelligent air interface may optimize a transceiver signal in a data-driven manner, and performance may vary depending on data distribution in different scenarios. To ensure the communication performance, it may be necessary to switch between different neural network models or fall back from the intelligent air interface to a conventional air interface. In addition, a change of a capability like computing or storage of a device may also cause fallback from the intelligent air interface to the conventional air interface. Therefore, before and after air interface switching, there may be a waste of transmission resources and a decrease in transmission efficiency.

**SUMMARY**

This application provides a communication method and apparatus, to avoid a waste of resources and improve transmission efficiency.

According to a first aspect, an embodiment of this application provides a communication method. The method may be performed by a first apparatus. The first apparatus may be a terminal device or a network device, or a component (for example, a processor, a chip, or a chip system) in a terminal device or a network device, or a logical module or software that can implement all or a part of functions of the terminal device, or a logical module or software that can implement all or a part of functions of the network device. The method includes: The first apparatus obtains indication information, where the indication information indicates an enable mode of a first air interface, and the enable mode includes one or more of the following: a non-retransmission enable mode, a retransmission enable mode, or a hybrid automatic repeat request HARQ enable mode; and the first apparatus sends first information to a second apparatus based on the indication information.

In the method, in an example, when the first apparatus is a terminal device, and the second apparatus is a network device, that the first apparatus obtains the indication information may be that the first apparatus receives the indication information from the second apparatus. In another example, when the first apparatus is a network device, and the second apparatus is a terminal device, that the first apparatus obtains the indication information may be understood as that the first apparatus determines the indication information, and the indication information is determined by the network device. In another example, when the first apparatus is a first terminal device, and the second apparatus is a second terminal device, that the first apparatus obtains the indication information may be understood as that the first apparatus obtains the indication information from a network device, and the indication information is determined by the network device. In the manner in which the first apparatus obtains the indication information, and sends the first information to the second apparatus based on the indication information, the first apparatus determines, based on different content included in the indication information and different content of the sent first information, a mechanism for air interface transmission, thereby avoiding a waste of resources, and improving transmission efficiency.

In a possible implementation, the enable mode includes the non-retransmission enable mode, and the first information includes new data information transmitted after enabling.

In the method, an air interface transmission mode is configured in the manner in which the enable mode includes the non-retransmission enable mode, thereby improving air interface intelligence flexibility. In addition, indicating a mechanism for air interface transmission after enabling can avoid a waste of resources, and improve transmission efficiency.

In another possible implementation, before the first apparatus sends the first information to the second apparatus based on the indication information, the method further includes: The first apparatus resets a HARQ process state.

In another possible implementation, the enable mode includes the retransmission enable mode, and the first information includes data information transmitted before enabling.

In the method, an air interface transmission mode is configured in the manner in which the enable mode includes the retransmission enable mode, thereby improving air interface intelligence flexibility. In addition, in the manner in which the first information includes the data information transmitted before enabling, data before and after enabling can be repeatedly transmitted, thereby improving data transmission efficiency. In addition, indicating a mechanism for air interface transmission after enabling can avoid a waste of resources, and improve transmission efficiency.

In another possible implementation, before the first apparatus sends the first information to the second apparatus based on the indication information, the method further includes: The first apparatus freezes a HARQ process state.

In another possible implementation, the enable mode includes the HARQ enable mode, and the first information is data information related to data information transmitted before enabling.

In the method, an air interface transmission mode is configured in the manner in which the enable mode includes the HARQ enable mode, thereby improving air interface intelligence flexibility. In addition, indicating a mechanism for air interface transmission after enabling can avoid a waste of resources, and improve transmission efficiency.

In another possible implementation, the related data information includes first redundancy version information, the data information transmitted before enabling includes second redundancy version information, the first redundancy version information is different from the second redundancy version information, and the first redundancy version information and the second redundancy version information belong to a same encoded codeword.

In another possible implementation, before the first apparatus sends the first information to the second apparatus based on the indication information, the method further includes: The first apparatus updates a HARQ process state.

In another possible implementation, enabling includes one or more of the following: activation of the first air interface, deactivation of the first air interface, switching from the first air interface to a second air interface, or fallback from the first air interface to the second air interface, where the first air interface is different from the second air interface.

In another possible implementation, the first air interface is an intelligent air interface, and the second air interface is a conventional air interface; or the first air interface is a conventional air interface, and the second air interface is an intelligent air interface; or the first air interface is a first intelligent air interface, and the second air interface is a second intelligent air interface.

In another possible implementation, the indication information further includes one or more of the following: HARQ version information, new data indication NDI information, air interface category information, or transmission configuration information.

In another possible implementation, the indication information is carried in physical layer downlink control information DCI, a media access control control element MAC CE, or radio resource control RRC signaling.

In another possible implementation, the non-retransmission enable mode, the retransmission enable mode, and the HARQ enable mode are determined based on one or more of the following: real-time performance of air interface transmission, statistical performance of air interface transmission, or an artificial intelligence AI resource state.

According to a second aspect, an embodiment of this application provides a communication method. The method may be performed by a second apparatus. The second apparatus may be a terminal device or a network device, or a component (for example, a processor, a chip, or a chip system) in a terminal device or a network device, or a logical module or software that can implement all or a part of functions of the terminal device, or a logical module or software that can implement all or a part of functions of the network device. The method includes: The second apparatus obtains indication information, where the indication information indicates an enable mode of a first air interface, and the enable mode includes one or more of the following: a non-retransmission enable mode, a retransmission enable mode, or a hybrid automatic repeat request HARQ enable mode; and the second apparatus receives first information from a first apparatus based on the indication information.

In the method, in an example, when the first apparatus is a terminal device and the second apparatus is a network device, that the first apparatus obtains the indication information may be that the first apparatus receives the indication information from the second apparatus, and that the second apparatus obtains the indication information may be that the second apparatus determines the indication information. In another example, when the first apparatus is a network device, and the second apparatus is a terminal device, that the first apparatus obtains the indication information may be understood as that the first apparatus determines the indication information, where the indication information is determined by the network device, and that the second apparatus obtains the indication information may be understood as that the second apparatus receives the indication information from the first apparatus. In another example, when the first apparatus is a first terminal device, and the second apparatus is a second terminal device, that the second apparatus obtains the indication information may be understood as that the second apparatus obtains the indication information from a network device, and the indication information is determined by the network device. In the manner in which the second apparatus obtains the indication information, and receives the first information based on the indication information, the first apparatus determines, based on different content included in the indication information and different content of the received first information, a mechanism for air interface transmission, thereby avoiding a waste of resources, and improving transmission efficiency.

In a possible implementation, the enable mode includes the non-retransmission enable mode, and the first information includes new data information transmitted after enabling.

In the method, an air interface transmission mode is configured in the manner in which the enable mode includes the non-retransmission enable mode, thereby improving air interface intelligence flexibility. In addition, indicating a mechanism for air interface transmission after enabling can avoid a waste of resources, and improve transmission efficiency.

In another possible implementation, before the second apparatus receives the first information from the first apparatus based on the indication information, the method further includes: The second apparatus resets a HARQ process state.

In another possible implementation, the enable mode includes the retransmission enable mode, and the first information includes data information transmitted before enabling.

In the method, an air interface transmission mode is configured in the manner in which the enable mode includes the retransmission enable mode, thereby improving air interface intelligence flexibility. In addition, in the manner in which the first information includes the data information transmitted before enabling, data before and after enabling can be repeatedly transmitted, thereby improving data transmission efficiency. In addition, indicating a mechanism for air interface transmission after enabling can avoid a waste of resources, and improve transmission efficiency.

In another possible implementation, before the second apparatus receives the first information from the first apparatus based on the indication information, the method further includes: The second apparatus freezes a HARQ process state.

In another possible implementation, the enable mode includes the HARQ enable mode, and the first information is data information related to data information transmitted before enabling.

In the method, an air interface transmission mode is configured in the manner in which the enable mode includes the HARQ enable mode, thereby improving air interface intelligence flexibility. In addition, indicating a mechanism for air interface transmission after enabling can avoid a waste of resources, and improve transmission efficiency.

In another possible implementation, the related data information includes first redundancy version information, the data information transmitted before enabling includes second redundancy version information, the first redundancy version information is different from the second redundancy version information, and the first redundancy version information and the second redundancy version information belong to a same encoded codeword.

In another possible implementation, before the second apparatus receives the first information from the first apparatus based on the indication information, the method further includes: The second apparatus updates a HARQ process state.

In another possible implementation, the method further includes: The second apparatus performs combined decoding processing on the first information and second information, where the second information is data information received before enabling.

In the method, combined decoding processing can improve transmission efficiency.

In another possible implementation, enabling includes one or more of the following: activation of the first air interface, deactivation of the first air interface, switching from the first air interface to a second air interface, or fallback from the first air interface to the second air interface, where the first air interface is different from the second air interface.

In another possible implementation, the first air interface is an intelligent air interface, and the second air interface is a conventional air interface; or the first air interface is a conventional air interface, and the second air interface is an intelligent air interface; or the first air interface is a first intelligent air interface, and the second air interface is a second intelligent air interface.

In another possible implementation, the indication information further includes one or more of the following: HARQ version information, new data indication NDI information, air interface category information, or transmission configuration information.

In another possible implementation, the indication information is carried in physical layer downlink control information DCI, a media access control control element MAC CE, or radio resource control RRC signaling.

In another possible implementation, the non-retransmission enable mode, the retransmission enable mode, and the HARQ enable mode are determined based on one or more of the following: real-time performance of air interface transmission, statistical performance of air interface transmission, or an artificial intelligence AI resource state.

According to a third aspect, an embodiment of this application provides a communication apparatus, including a processing module and a transceiver module. The processing module is configured to obtain indication information, where the indication information indicates an enable mode of a first air interface, and the enable mode includes one or more of the following: a non-retransmission enable mode, a retransmission enable mode, or a hybrid automatic repeat request HARQ enable mode. The transceiver module is configured to send first information to a second apparatus based on the indication information.

In a possible implementation, the enable mode includes the non-retransmission enable mode, and the first information includes new data information transmitted after enabling.

In another possible implementation, the processing module is further configured to reset a HARQ process state.

In another possible implementation, the enable mode includes the retransmission enable mode, and the first information includes data information transmitted before enabling.

In another possible implementation, the processing module is further configured to freeze a HARQ process state.

In another possible implementation, the enable mode includes the HARQ enable mode, and the first information is data information related to data information transmitted before enabling.

In another possible implementation, the related data information includes first redundancy version information, the data information transmitted before enabling includes second redundancy version information, the first redundancy version information is different from the second redundancy version information, and the first redundancy version information and the second redundancy version information belong to a same encoded codeword.

In another possible implementation, the processing module is further configured to update a HARQ process state.

In another possible implementation, enabling includes one or more of the following: activation of the first air interface, deactivation of the first air interface, switching from the first air interface to a second air interface, or fallback from the first air interface to the second air interface, where the first air interface is different from the second air interface.

In another possible implementation, the first air interface is an intelligent air interface, and the second air interface is a conventional air interface; or the first air interface is a conventional air interface, and the second air interface is an intelligent air interface; or the first air interface is a first intelligent air interface, and the second air interface is a second intelligent air interface.

In another possible implementation, the indication information further includes one or more of the following: HARQ version information, new data indication NDI information, air interface category information, or transmission configuration information.

In another possible implementation, the indication information is carried in physical layer downlink control information DCI, a media access control control element MAC CE, or radio resource control RRC signaling.

In another possible implementation, the non-retransmission enable mode, the retransmission enable mode, and the HARQ enable mode are determined based on one or more of the following: real-time performance of air interface transmission, statistical performance of air interface transmission, or an artificial intelligence AI resource state.

For technical effect brought by the third aspect or the possible implementations, refer to the descriptions of the technical effect of the first aspect or corresponding implementations.

According to a fourth aspect, an embodiment of this application provides a communication apparatus, including a processing module and a transceiver module. The processing module is configured to obtain indication information, where the indication information indicates an enable mode of a first air interface, and the enable mode includes one or more of the following: a non-retransmission enable mode, a retransmission enable mode, or a hybrid automatic repeat request HARQ enable mode. The transceiver module is configured to receive first information from a first apparatus based on the indication information.

In a possible implementation, the enable mode includes the non-retransmission enable mode, and the first information includes new data information transmitted after enabling.

In another possible implementation, the processing module is further configured to reset a HARQ process state.

In another possible implementation, the enable mode includes the retransmission enable mode, and the first information includes data information transmitted before enabling.

In another possible implementation, the processing module is further configured to freeze a HARQ process state.

In another possible implementation, the enable mode includes the HARQ enable mode, and the first information is data information related to data information transmitted before enabling.

In another possible implementation, the related data information includes first redundancy version information, the data information transmitted before enabling includes second redundancy version information, the first redundancy version information is different from the second redundancy version information, and the first redundancy version information and the second redundancy version information belong to a same encoded codeword.

In another possible implementation, the processing module is further configured to update a HARQ process state.

In another possible implementation, the processing module is further configured to perform combined decoding processing on the first information and second information, where the second information is data information received before enabling.

In another possible implementation, enabling includes one or more of the following: activation of the first air interface, deactivation of the first air interface, switching from the first air interface to a second air interface, or fallback from the first air interface to the second air interface, where the first air interface is different from the second air interface.

In another possible implementation, the first air interface is an intelligent air interface, and the second air interface is a conventional air interface; or the first air interface is a conventional air interface, and the second air interface is an intelligent air interface; or the first air interface is a first intelligent air interface, and the second air interface is a second intelligent air interface.

In another possible implementation, the indication information further includes one or more of the following: HARQ version information, new data indication NDI information, air interface category information, or transmission configuration information.

In another possible implementation, the indication information is carried in physical layer downlink control information DCI, a media access control control element MAC CE, or radio resource control RRC signaling.

In another possible implementation, the non-retransmission enable mode, the retransmission enable mode, and the HARQ enable mode are determined based on one or more of the following: real-time performance of air interface transmission, statistical performance of air interface transmission, or an artificial intelligence AI resource state.

For technical effect brought by the fourth aspect or the possible implementations, refer to the descriptions of the technical effect of the second aspect or corresponding implementations.

According to a fifth aspect, an embodiment of this application provides a first apparatus. The first apparatus includes a processor and a memory. The memory stores a computer program or computer instructions, and the processor is configured to invoke and run the computer program or the computer instructions stored in the memory, to enable the processor to implement any implementation of the first aspect.

Optionally, the first apparatus further includes a transceiver, and the processor is configured to control the transceiver to receive/send a signal.

According to a sixth aspect, an embodiment of this application provides a second apparatus. The second apparatus includes a processor and a memory. The memory stores a computer program or computer instructions, and the processor is configured to invoke and run the computer program or the computer instructions stored in the memory, to enable the processor to implement any implementation of the second aspect.

Optionally, the second apparatus further includes a transceiver, and the processor is configured to control the transceiver to receive/send a signal.

According to a seventh aspect, an embodiment of this application provides a first apparatus, including a processor and an interface circuit. The processor is configured to communicate with another apparatus through the interface circuit, and perform the method according to the first aspect. There are one or more processors.

According to an eighth aspect, an embodiment of this application provides a second apparatus, including a processor and an interface circuit. The processor is configured to communicate with another apparatus through the interface circuit, and perform the method according to the second aspect. There are one or more processors.

According to a ninth aspect, an embodiment of this application provides a first apparatus, including a processor. The processor is connected to a memory, and is configured to invoke a program stored in the memory, to perform the method according to the first aspect. The memory may be located inside or outside the first apparatus. In addition, there are one or more processors.

According to a tenth aspect, an embodiment of this application provides a second apparatus, including a processor. The processor is connected to a memory, and is configured to invoke a program stored in the memory, to perform the method according to the second aspect. The memory may be located inside or outside the second apparatus. In addition, there are one or more processors.

In an implementation, the first apparatus in the third aspect, the fifth aspect, the seventh aspect, or the ninth aspect may be a chip or a chip system.

In an implementation, the second apparatus in the fourth aspect, the sixth aspect, the eighth aspect, or the tenth aspect may be a chip or a chip system.

According to an eleventh aspect, an embodiment of this application provides a computer program product including a computer program or instructions. When the computer program product runs on a computer, the computer is enabled to perform any implementation of the first aspect or the second aspect.

According to a twelfth aspect, an embodiment of this application provides a computer-readable storage medium, including a computer program or instructions. When the computer program or the instructions are run on a computer, the computer is enabled to perform any implementation of the first aspect or the second aspect.

According to a thirteenth aspect, an embodiment of this application provides a chip apparatus, including a processor, configured to invoke a computer program or instructions in a memory, to enable the processor to perform any implementation of the first aspect or the second aspect.

Optionally, the processor is coupled to the memory through an interface.

According to a fourteenth aspect, an embodiment of this application provides a communication system. The communication system includes a first apparatus and a second apparatus. The first apparatus is configured to perform the method shown in the first aspect, and the second apparatus is configured to perform the method shown in the second aspect.

It can be learned from the foregoing technical solutions that the first apparatus obtains the indication information, where the indication information indicates the enable mode of the first air interface, and the enable mode includes one or more of the following: the non-retransmission enable mode, the retransmission enable mode, or the hybrid automatic repeat request HARQ enable mode; and the first apparatus sends the first information to the second apparatus based on the indication information. In the manner in which the first apparatus obtains the indication information, and sends the first information to the second apparatus based on the indication information, the first apparatus determines, based on different content included in the indication information and different content of the sent first information, a mechanism for air interface transmission, thereby avoiding a waste of resources, and improving transmission efficiency.

## BRIEF DESCRIPTION OF DRAWINGS

FIG. 1 is a diagram of an architecture of a communication system according to an embodiment of this application;
FIG. 2A is a diagram of another communication system according to an embodiment of this application;
FIG. 2B is a diagram of another communication system according to an embodiment of this application;
FIG. 2C is a diagram of another communication system according to an embodiment of this application;
FIG. 3 is a diagram of a neuron structure according to an embodiment of this application;
FIG. 4 is a schematic flowchart of communication of a neural network-based transceiver machine according to an embodiment of this application;
FIG. 5 is schematic flowcharts of signal processing of different modules optimized by neural networks according to embodiments of this application;
FIG. 6 is a schematic flowchart of conventional data transmission processing according to an embodiment of this application;
FIG. 7 is a schematic flowchart of a communication method according to an embodiment of this application;
FIG. 8 shows a signaling format of a MAC CE according to an embodiment of this application;
FIG. 9 is a diagram of air interface transmission before and after enabling according to an embodiment of this application;
FIG. 10 is another diagram of air interface transmission before and after enabling according to an embodiment of this application;
FIG. 11 is another diagram of air interface transmission before and after enabling according to an embodiment of this application;
FIG. 12 is a diagram of a structure of a first apparatus according to an embodiment of this application;
FIG. 13 is a diagram of a structure of a second apparatus according to an embodiment of this application;
FIG. 14 is a diagram of a structure of an apparatus according to an embodiment of this application;
FIG. 15 is a diagram of a structure of another apparatus according to an embodiment of this application; and
FIG. 16 is a diagram of a structure of another apparatus according to an embodiment of this application.

## DESCRIPTION OF EMBODIMENTS

The following clearly and completely describes the technical solutions in embodiments of this application with reference to accompanying drawings in embodiments of this application. It is clear that the described embodiments are merely a part but not all of embodiments of this application. All other embodiments obtained by a person skilled in the art based on embodiments of this application without creative efforts shall fall within the protection scope of this application.

Reference to "an embodiment", "some embodiments", or the like described in this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In descriptions of this application, unless otherwise specified, "/" means "or". For example, A/B may indicate A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. "At least one of the following items (pieces)" or a similar expression thereof refers to any combination of these items, including any combination of singular items (pieces) or plural items (pieces). For example, at least one item (piece) of a, b, or c may indicate a, b, c, a and b, a and c, b and c, or a, b, and c, a, b, and c each may be singular or plural.

It may be understood that, in this application, an "indication" may include a direct indication, an indirect indication, an explicit indication, and an implicit indication. When a piece of indication information indicates A, it may be understood as that the indication information carries A, directly indicates A, or indirectly indicates A.

In this application, information indicated by the indication information is referred to as to-be-indicated information. In a specific implementation process, there are many manners of indicating the to-be-indicated information. For example, the manners include but are not limited to a manner in which the to-be-indicated information, for example, the to-be-indicated information itself or an index of the to-be-indicated information, may be directly indicated, or a manner in which the to-be-indicated information may be indirectly indicated by indicating other information. There is an association relationship between the other information and the to-be-indicated information. Alternatively, only a part of the to-be-indicated information may be indicated, and the other part of the to-be-indicated information is known or pre-agreed on. For example, specific information may alternatively be indicated according to an arrangement sequence of a plurality of pieces of information that is pre-agreed on (for example, stipulated in a protocol), to reduce indication overheads to some extent.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit end device by sending configuration information to a receive end device.

It may be understood that "sending" and "receiving" in this application indicate a signal transmission direction. For example, "sending information to XX" may be understood as that a target end of the information is the XX, and may include direct sending through an air interface, or include indirect sending through an air interface by another unit or module. "Receiving information from YY" may be understood as that a source end of the information is YY, and may include directly receiving the information from YY through an air interface, or may include indirectly receiving the information from YY from another unit or module through an air interface. "Sending" may alternatively be understood as "outputting" from a chip interface, and "receiving" may alternatively be understood as "inputting" into the chip interface.

In other words, sending and receiving may be performed between devices, for example, between a network device and a terminal device; or may be performed inside a device, for example, sending or receiving between components, modules, chips, software modules, or hardware modules inside the device through a bus, a cable, or an interface.

It may be understood that necessary processing, such as coding and modulation, may be performed on the information between the source at which the information is sent and the destination, but the destination may understand valid information from the source. Similar descriptions in this application may be understood similarly, and details are not described again.

A communication method provided in embodiments of this application may be applied to a cellular communication system related to a 3rd generation partnership project (3rd generation partnership project, 3GPP), for example, a 4th generation (4th generation, 4G) communication system, for example, a long-term evolution (long-term evolution, LTE) communication system, or may be applied to a 5th generation (5th generation, 5G) communication system, for example, a 5G new radio (new radio, NR) communication system, or may be applied to various future communication systems, for example, a 6th generation (6th generation, 6G) communication system. The method provided in embodiments of this application may be further applied to a Bluetooth system, a wireless fidelity (wireless fidelity, Wi-Fi) system, a LoRa system or a vehicle to everything system, a communication system that supports integration of a plurality of wireless technologies, and a device-to-device (device-to-device, D2D) system. The method provided in embodiments of this application may be further applied to a satellite communication system. The satellite communication system may be integrated with the foregoing communication system. A wireless communication system in this application further includes but is not limited to: a narrowband-internet of things (narrowband-internet of things, NB-IoT) system, a global system for mobile communications (global system for mobile communications, GSM), an enhanced data rate for GSM evolution (enhanced data rate for GSM evolution, EDGE) system, a wideband code division multiple access (wideband code division multiple access, WCDMA) system, a code division multiple access 2000 (code division multiple access, CDMA2000) system, or a time division-synchronization code division multiple access (time division synchronization code division multiple access, TD-SCDMA) system.

The communication system to which embodiments of this application are applied includes a first apparatus and a second apparatus. Optionally, the communication system may further include more apparatuses. The second apparatus and the more apparatuses may perform technical solutions similar to those in this application.

Optionally, the first apparatus is a network device or a terminal device; the first apparatus is a chip, a chip system, or a processor in a network device or a terminal device; the first apparatus is a logical module, software, or the like that implements a part or all of functions of a network device; or the first apparatus is a logical module, software, or the like that implements a part or all of functions of a terminal device.

Optionally, the second apparatus is a network device or a terminal device; the second apparatus is a chip, a chip system, or a processor in a network device or a terminal device; the second apparatus is a logical module, software, or the like that implements a part or all of functions of a network device; or the second apparatus is a logical module, software, or the like that implements a part or all of functions of a terminal device.

For example, the first apparatus is a terminal device, and the second apparatus is a network device; or the first apparatus is a network device, and the second apparatus is a terminal device; or the first apparatus is a first terminal device, and the second apparatus is a second terminal device. Optionally, the network device is an access network device or a core network device. The following mainly describes the technical solutions of this application by using an example in which the network device is the access network device.

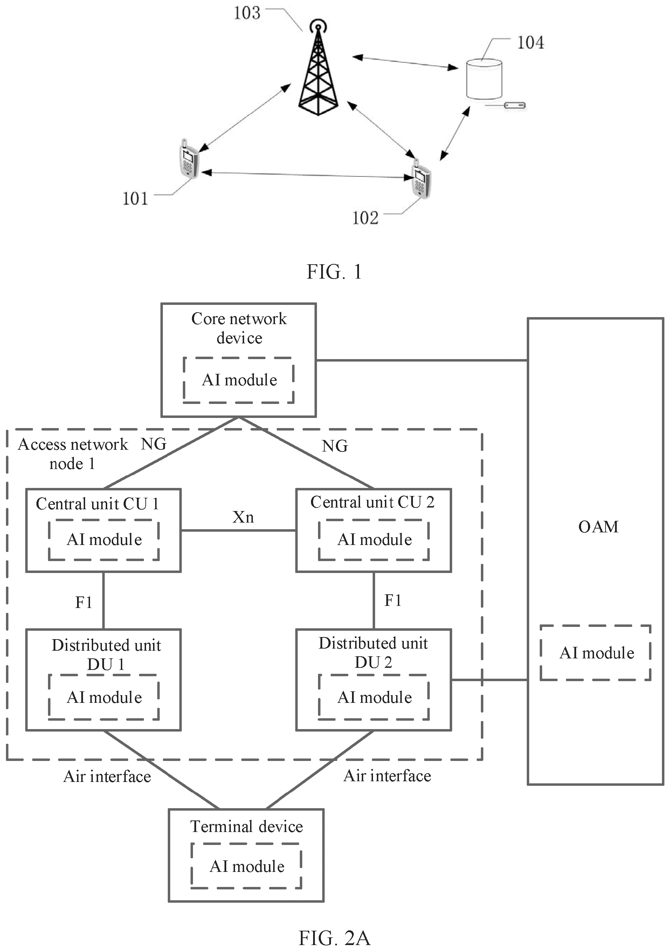

FIG. 1 is a diagram of an architecture of a communication system according to an embodiment of this application. As shown in FIG. 1, a first apparatus is a terminal device 101, and a second apparatus is a base station 103. Alternatively, a first apparatus is the base station 103, and a second apparatus is the terminal device 101. The technical solutions of this application may be performed between the terminal device 101 and the base station 103. Alternatively, a first apparatus is the terminal device 101, and a second apparatus is a terminal device 102. The technical solutions of this application may be performed between the terminal device 101 and the terminal device 102. As shown in FIG. 1, the communication system includes an independent AI network element 104, or AI modules may be respectively disposed in the base station and the terminal device, to provide an AI service.

The following describes the terminal device and the network device in this application.

The terminal device is also referred to as user equipment (user equipment, UE), a mobile station (mobile station, MS), a mobile terminal (mobile terminal, MT), customer premise equipment (customer premise equipment, CPE), or the like. The terminal device is a device that includes a wireless communication function (providing voice/data connectivity for a user), for example, a handheld device having a wireless connection function, a vehicle-mounted device, or a machine type communication (machine type communication, MTC) terminal. Currently, the terminal device may include: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. For example, the wireless terminal in self driving may be an unmanned aerial vehicle, a helicopter, or an airplane. For example, the wireless terminal in vehicle to everything may be a vehicle-mounted device, vehicle equipment, a vehicle-mounted module, a vehicle, or a ship. The wireless terminal in industrial control may be a camera, a robot, a robotic arm, or the like. The wireless terminal in the smart home may be a television, an air conditioner, a robot vacuum, a speaker, a set-top box, or the like.

It should be noted that the terminal device may be a device or an apparatus with a chip, a device or an apparatus integrated with a circuit, or a chip, a module, or a control unit in the device or the apparatus shown above. This is not specifically limited in this application.

The network device is a device deployed in a radio access network to provide a wireless communication function for the terminal device. The network device may also be referred to as a radio access network (radio access network, RAN) entity, an access node, a network node, a communication apparatus, or the like.

Specifically, the network device may be an access network device in a cellular system related to the 3rd generation partnership project (3rd generation partnership project, 3GPP), for example, a 4th-generation (4th-generation, 4G) mobile communication system or a 5G mobile communication system. Alternatively, the network device may be an access network device in an open radio access network (open RAN, O-RAN, or ORAN) or a cloud radio access network (cloud radio access network, CRAN). Alternatively, the network device may be an access network device in a communication system obtained by converging two or more of the foregoing communication systems.

The network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a macro base station, a micro base station, a wireless relay node, a donor node, a radio controller in a CRAN scenario, a wireless backhaul node, a transmission point (transmission point, TP), or a transmission and reception point (transmission and reception point, TRP). Alternatively, the network device may be an access network device in the 5G mobile communication system, for example, a next generation NodeB (next generation NodeB, gNB), a TRP, or a TP in a new radio (new radio, NR) system, or one antenna panel or a group of antenna panels (including a plurality of antenna panels) of a base station in a 5G mobile communication system. Alternatively, the network device may be a network node that forms a gNB or a transmission point, for example, a central unit (central unit, CU), a distributed unit (distributed unit, DU), a CU-control plane (control plane, CP), a CU-user plane (user plane, UP), or a radio unit (radio unit, RU). The CU and the DU may be separately configured, or may be included in a same network element, for example, a BBU. The RU may be included in a radio frequency device or a radio frequency unit, for example, in a remote radio unit (remote radio unit, RRU), an active antenna unit (active antenna unit, AAU), or a remote radio head (remote radio head, RRH). Alternatively, the network device may be a server, a wearable device, a vehicle, a vehicle-mounted device, or the like. For example, a network device in a V2X technology may be a road side unit (road side unit, RSU).

It should be noted that in different systems, the CU (or the CU-CP and the CU-UP), the DU, or the RU may have different names, but a person skilled in the art may understand meanings of the names. For example, in an ORAN system, the CU may also be referred to as an open central unit (open central unit, O-CU) or an open CU, the DU may also be referred to as an open distributed unit (open distributed unit, O-DU), the central unit control plane (central unit control plane, CU-CP) may also be referred to as an open central unit control plane (open central unit control plane, O-CU-CP) or an open CU-CP, the central unit user plane (central unit user plane, CU-UP) may also be referred to as an open central unit user plane (open central unit user plane, O-CU-UP) or an open CU-UP, and the RU may also be referred to as an open radio unit (open radio unit, O-RU). This is not specifically limited in this application. Any unit in the CU, the CU-CP, the CU-UP, the DU, and the RU in this application may be implemented by using a software module, a hardware module, or a combination of the software module and the hardware module.

Optionally, for the network elements in the ORAN system, each network element may implement a protocol layer function shown in Table 1.

Table 1

| ORAN network element | Protocol layer function |
|---|---|
| O-CU-CP | RRC, packet data convergence protocol control plane (packet data convergence protocol control plane, PDCP-C) |
| O-CU-UP | Service data adaptation protocol (service data adaptation protocol, SDAP) and packet data convergence protocol user plane (packet data convergence protocol user plane, PDCP-U) |
| O-DU | Radio link control (radio link control, RLC), media access control (media access control, MAC), and physical higher layer (PHY-high) |
| O-RU | Physical lower layer (PHY-low) |

It should be noted that Table 1 is merely an example. During actual application, the protocol layer function supported by each network element is not limited. For example, each network element may support more protocol layer functions, or a protocol layer function supported by each network element is specifically configured based on an actual situation. This is not specifically limited in this application.

Architectures of the CU and the DU of the access network device are described below. The access network device includes at least one CU and at least one DU. Optionally, the access network device further includes at least one RU.

Descriptions are provided below by using an example in which the access network device includes one CU and one DU. The CU has a part of functions of a core network, and the CU may include a CU-CP and a CU-UP. The CU and the DU may be configured based on protocol layer functions of a wireless network that are implemented by the CU and the DU. For example, the CU is configured to implement functions of a packet data convergence protocol (packet data convergence protocol, PDCP) layer and a protocol layer (for example, an RRC layer and/or an SDAP layer) above. The DU is configured to implement a function of a protocol layer (for example, an RLC layer, a MAC layer, and/or a physical (physical, PHY) layer) below the PDCP layer. For another example, the CU is configured to implement a function of a protocol layer (for example, an RRC layer and/or an SDAP layer) above a PDCP layer, and the DU is configured to implement functions of the PDCP layer and a protocol layer (for example, an RLC layer, a MAC layer, and/or a PHY layer) below the PDCP layer.

When the CU includes the CU-CP and a CU-UP, the CU-CP is configured to implement a control plane function of the CU, and the CU-UP is configured to implement a user plane function of the CU. For example, when the CU is configured to implement functions of the PDCP layer, the RRC layer, and the SDAP layer, the CU-CP is configured to implement the function of the RRC layer and a control plane function of the PDCP layer, and the CU-UP is configured to implement the function of the SDAP layer and a user plane function of the PDCP layer.

The CU-CP may interact with a network element that is in the core network and that is configured to implement a control plane function. The network element that is in the core network and that is configured to implement the control plane function may be an access and mobility function network element, for example, an access and mobility management function (access and mobility management function, AMF) in the 5G mobile communication system. The access and mobility function network element is configured to be responsible for mobility management in a mobile network, for example, position update of a terminal device, network registration of the terminal device, and handover of the terminal device. The CU-UP may interact with a network element that is in the core network and that is configured to implement a user plane function. The network element that is in the core network and that is configured to implement the user plane function, for example, a user function (user plane function, UPF) in the 5G mobile communication system, is configured to be responsible for forwarding and receiving data in the terminal device.

The foregoing configuration of the CU and the DU is merely an example. Alternatively, functions of the CU and the DU may be configured as needed. For example, the CU or the DU may be configured to have functions of more protocol layers, or the CU or the DU may be configured to have a part of processing functions of protocol layers. For example, a part of functions of the RLC layer and functions of a protocol layer above the RLC layer are configured on the CU, and remaining functions of the RLC layer and functions of a protocol layer below the RLC layer are configured on the DU. For another example, functions of the CU or the DU may alternatively be obtained through division based on a service type or another system requirement. For example, division is performed based on a delay. In this case, functions whose processing time needs to satisfy a small delay requirement are configured on the DU, and functions whose processing time does not need to satisfy the delay requirement are configured on the CU.

The DU and the RU may work together to implement a function of the PHY layer. One DU may be connected to one or more RUs. Functions of the DU and the RU may be configured in a plurality of manners according to a design. For example, the DU is configured to implement a baseband function, and the RU is configured to implement an intermediate radio frequency function. For another example, the DU is configured to implement higher-layer functions of the PHY layer, and the RU is configured to implement lower-layer functions of the PHY layer or implement the lower-layer functions and a radio frequency function. The higher-layer functions of the physical layer may include a part of functions of the physical layer, and the part of functions is closer to the MAC layer. The lower-layer functions of the physical layer may include another part of functions of the physical layer, and the part of functions is closer to an intermediate radio frequency side.

Optionally, the network device may be a core network device. The core network device is responsible for access control, registration management, service management, mobility management, and the like for the terminal device to access the network. For example, the core network device is the AMF.

It should be noted that the network device may be the device or the apparatus shown above, or may be a component (for example, a chip), a module, or a unit in the device or the apparatus shown above. This is not specifically limited in this application.

In the communication system provided in this application, an AI network element may be introduced to implement a part or all of AI-related operations. The AI network element may also be referred to as an AI node, an AI device, an AI entity, an AI module, an AI model, an AI unit, or the like. The AI network element may be built in a network element in a communication system. For example, the AI network element may be an AI module built in an access network device, a core network device, a cloud server, or operation, administration and maintenance (operation, administration and maintenance, OAM), to implement an AI-related function. The OAM may be used as a network management system of a core network device and/or as a network management system of an access network device. Alternatively, the AI network element may be an independently configured network element in the communication system. Optionally, a terminal device or a chip built in the terminal device may also include an AI entity configured to implement an AI-related function. With reference to FIG. 2A, the following describes another communication system provided in an embodiment of this application.

FIG. 2A is a diagram of another communication system according to an embodiment of this application. As shown in FIG. 2A, network elements in the communication system are connected to each other through an interface (for example, an NG interface or an Xn interface) or an air interface. One or more AI modules (for clarity, FIG. 2A shows only one AI module) are configured in these network element nodes (for example, one or more devices in a core network device, an access network node (a RAN node), a terminal, or an OAM). The access network node may be used as an independent RAN node, or may include a plurality of RAN nodes, for example, include a CU and a DU. One or more AI modules may also be configured in the CU and/or the DU. Optionally, the CU may be further split into a CU-CP and a CU-UP. One or more AI models are configured in the CU-CP and/or the CU-UP.

The AI module is configured to implement a corresponding AI function. AI modules deployed in different network elements may be the same or different. A model of the AI module is configured based on different parameters, and the AI module may implement different functions. The model of the AI module may be configured based on one or more of the following parameters: a structure parameter (for example, at least one of the following: a quantity of layers of a neural network, a width of a neural network, a connection relationship between layers, a weight value of a neuron, an activation function of a neuron, or a bias in an activation function), an input parameter (for example, a type of the input parameter and/or a dimension of the input parameter), or an output parameter (for example, a type of the output parameter and/or a dimension of the output parameter). The bias in the activation function may also be referred to as a bias of a neural network.

One AI module may have one or more models. One output may be obtained through inference by using one model, where the output includes one or more parameters. Learning processes, training processes, or inference processes of different models may be deployed on different nodes or devices, or may be deployed on a same node or device.

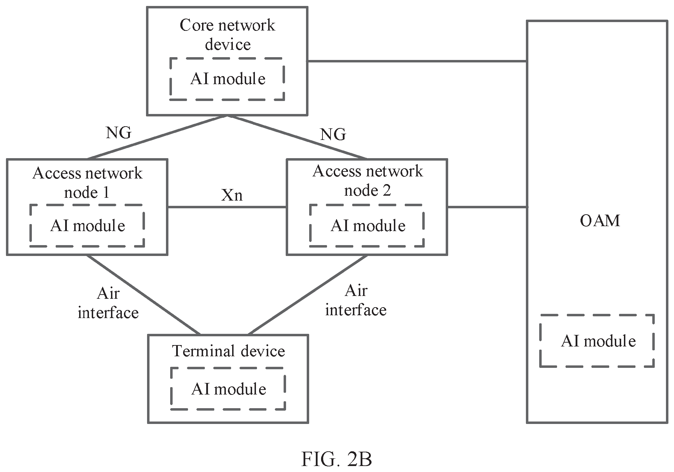

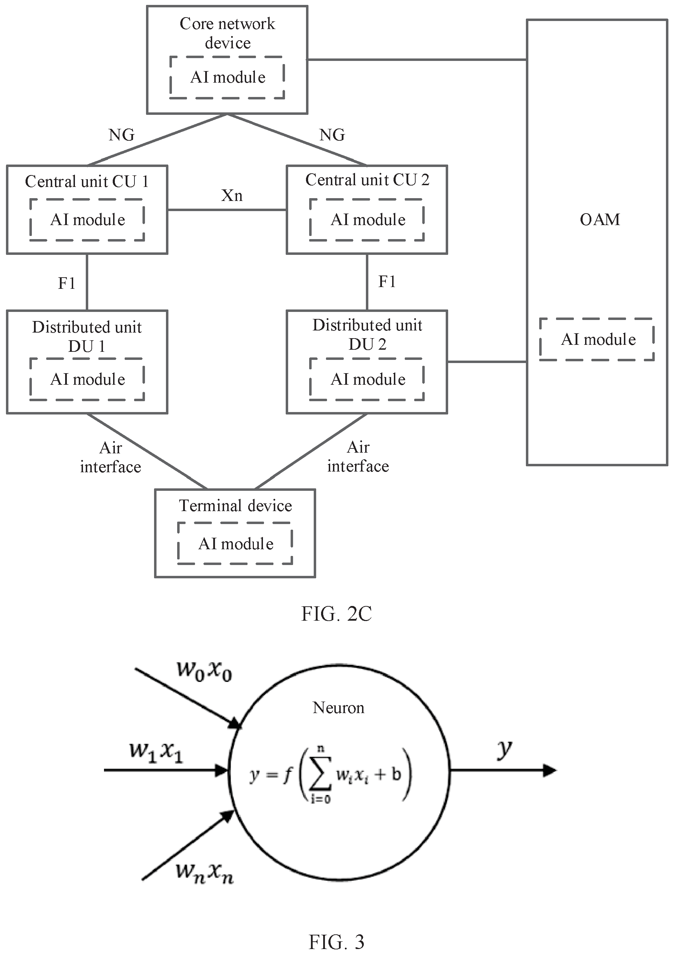

It should be noted that the access network node shown in FIG. 2A above may be used as a whole, or the access network node shown in FIG. 2A above uses an architecture in which the CU and the DU are separated. FIG. 2B is a diagram of another communication system according to an embodiment of this application. FIG. 2B is a diagram of a communication system in which an access network node is used as a whole and the access network node is connected to a terminal device. FIG. 2C is a diagram of another communication system according to an embodiment of this application. FIG. 2C is a diagram of a communication system in which an access network node uses an architecture in which a CU and a DU are separated.

The following describes in detail the communication method provided in embodiments of this application with reference to the communication system shown in FIG. 1, FIG. 2A, FIG. 2B, or FIG. 2C.

To better understand solutions provided in embodiments of this application, the following first describes some terms, concepts, or procedures in embodiments of this application.

1. Neural network

The neural network (neural network, NN) is a specific model in a machine learning technology. According to a universal approximation theorem, the neural network can theoretically approximate any continuous function, so that the neural network has a capability of learning any mapping. In a conventional communication system, rich expertise is required to design a communication module. However, in a neural network-based deep learning communication system, an implicit pattern structure may be automatically discovered from a large quantity of data sets and a mapping relationship between data may be established, to obtain performance better than that of a conventional modeling method.

The idea of the neural network comes from a neuron structure of brain tissue. For example, each neuron performs a weighted summation operation on input values of the neuron, and outputs an operation result through an activation function. FIG. 3 is a diagram of a neuron structure according to an embodiment of this application. It is assumed that an input of a neuron is $x = [x_0, x_1, \ldots, x_n]$, and a weight corresponding to each input is respectively $w = [w, w_1, \ldots, w_n]$, where n is a positive integer, $w_i$ and $x_i$ may be various possible types such as a decimal, an integer (for example, 0, a positive integer, or a negative integer), or a complex number. $w_i$ is used as a weight of $x_i$, and is used to weight $x_i$. A bias for performing weighted summation on the input values based on the weights is, for example, b. There may be a plurality of forms of the activation function. It is assumed that an activation function of a neuron is $y = f(z) = \max(0, z)$, an output of the neuron is

$$y = f\left(\sum_{i=0}^{i=n} w_i * x_i + b\right) = \max\left(0, \sum_{i=0}^{i=n} w_i * x_i + b\right)$$ . For another example, an activation function of a neuron is $y = f(z) = z$, and an output of the neuron is $y = f\left(\sum_{i=0}^{i=n} w_i * x_i + b\right) = \sum_{i=0}^{i=n} w_i * x_i + b$ . b may be any possible type like a decimal, an integer (for example, 0, a positive integer, or a negative integer), or a complex number. Activation functions of different neurons in the neural network may be the same or different.

The neural network usually includes a plurality of layers, and each layer may include one or more neurons. A depth and/or a width of the neural network is increased, so that an expression capability of the neural network can be improved, and a more powerful information extraction and abstraction modeling capability can be provided for a complex system. The depth of the neural network may refer to a quantity of layers included in the neural network, and a quantity of neurons included in each layer may be referred to as the width of the layer. In an implementation, the neural network includes an input layer and an output layer. The input layer of the neural network performs neuron processing on received input information, and transfers a processing result to the output layer. The output layer obtains an output result of the neural network. In another implementation, the neural network includes an input layer, a hidden layer, and an output layer. Refer to the following figure. The input layer of the neural network performs neuron processing on received input information, and transfers a processing result to an intermediate hidden layer. The hidden layer performs calculation on the received processing result to obtain a calculation result. The hidden layer transfers the calculation result to the output layer or a next adjacent hidden layer. Finally, the output layer obtains an output result of the neural network. One neural network may include one hidden layer, or include a plurality of hidden layers that are sequentially connected. This is not limited.

The neural network is, for example, a deep neural network (deep neural network, DNN). According to a network construction manner, the DNN may include a feedforward neural network (feedforward neural network, FNN), a convolutional neural network (convolutional neural network, CNN), and a recurrent neural network (recurrent neural network, RNN).

2. Neural network-based transceiver machine

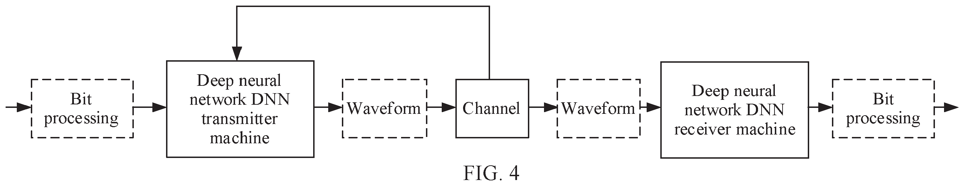

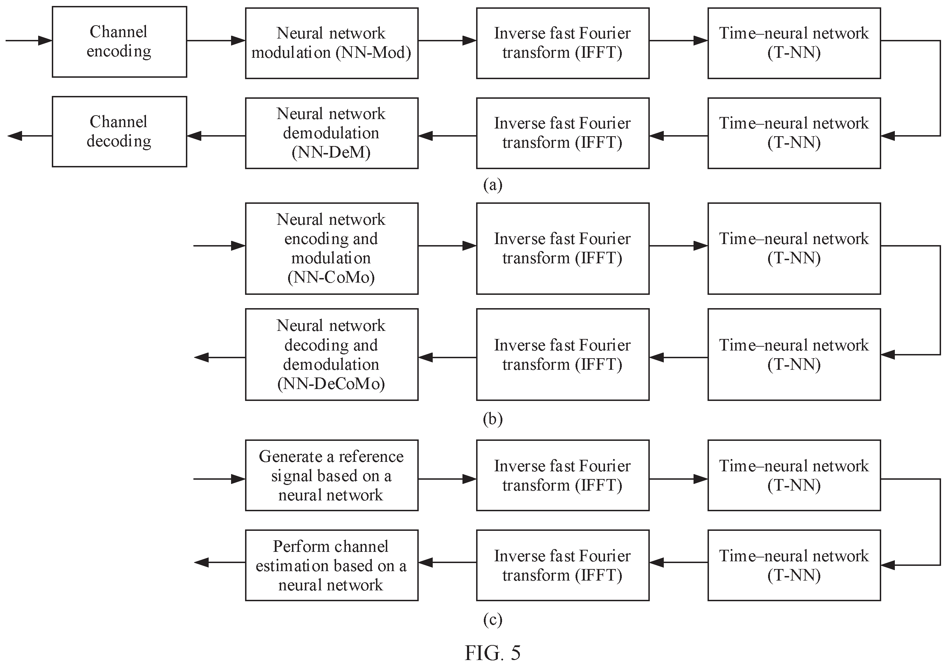

The neural network-based transceiver machine may optimize a signal sending design and receiving performance based on a scenario through data-driven training. FIG. 4 is a schematic flowchart of communication of a neural network-based transceiver machine according to an embodiment of this application. Specifically, the following modules may be included: a bit processing module, that is, bit processing is performed on a transmission signal to obtain a to-be-transmitted bit; a DNN transmitter module, that is, the to-be-transmitted bit may be input into a deep neural network (deep neural network, DNN) transmitter machine to generate a modulated symbol or a to-be-sent signal; optionally, a waveform module, that is, waveform shaping may be performed on a signal processed by the transmitter machine; a channel module, that is, a signal on which waveform shaping is performed arrives at a receiver machine through a channel; and a DNN receiver module, that is, the received signal is processed and received by a DNN receiver machine. The neural network may replace a specific module or a plurality of modules during sending or receiving processing, for example, may be configured to optimize channel coding, modulation, waveform, pilot, and other modules during transceiver signal processing. FIG. 5 is schematic flowcharts of signal processing of different modules optimized by neural networks according to embodiments of this application. In (a) in FIG. 5, the neural network is configured to optimize a modulation module and a waveform. Channel encoding is performed on a to-be-transmitted bit to obtain an encoded bit. After neural network modulation (neural network modulation, NN-Mod), the encoded bit is mapped to a physical resource, transformed into a time-domain signal through inverse fast Fourier transform (inverse fast Fourier transform, IFFT), and then processed by a time-neural network (time-neural network, T-NN). Correspondingly, after receiving a signal over the T-NN, a receive end performs IFFT on the signal, then performs neural network demodulation (neural network demodulation, NN-DeM) on a transformed signal, and finally performs channel decoding. In (b) of FIG. 5, the neural network is for coding and modulation joint optimization. Neural network encoding and modulation (neural network encoding and modulation, NN-CoMo) is performed on a to-be-transmitted bit to obtain a modulated symbol. Then, the modulated symbol is processed through IFFT and the like, then sent to a T-NN for processing. Correspondingly, after obtaining a signal processed by the T-NN, a receive end performs IFFT on the signal, and then performs neural network decoding and demodulation (neural network decoding and demodulation, NN-DeCoMo) on a transformed signal. In (c) of FIG. 5, the neural network is configured to optimize a reference signal. A transmit end generates the reference signal based on the neural network, and then sends the reference signal after processing like IFFT to a T-NN for processing. Correspondingly, after obtaining a signal processed by the T-NN, a receive end performs IFFT on the signal, and then performs channel estimation on a transformed signal based on the neural network.

In the neural network-based transceiver machine, an intelligent air interface may optimize a transceiver signal in a data-driven manner, and performance may vary according to data distribution in different scenarios. To ensure the communication performance, it may be necessary to switch between different neural network models, resulting in switching between intelligent air interfaces, or fallback from the intelligent air interface to a conventional air interface. In addition, a change of a capability like computing or storage of a device may also cause fallback from the intelligent air interface to the conventional air interface.

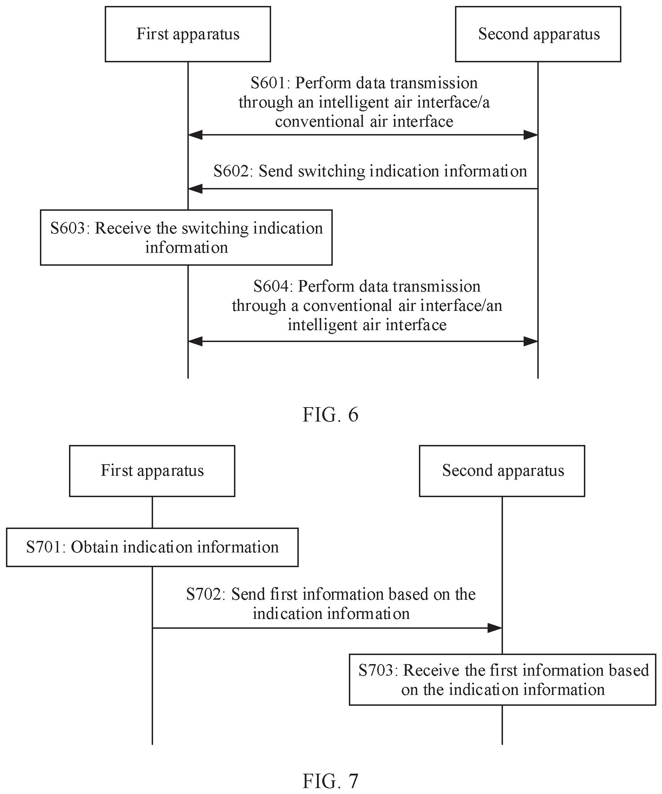

FIG. 6 is a schematic flowchart of conventional data transmission processing according to an embodiment of this application. Details are as follows:

S601: A first apparatus and a second apparatus perform data transmission through an intelligent air interface/a conventional air interface.

S602: The second apparatus sends switching indication information to the first apparatus, where the switching indication information indicates air interface switching.

S603: The first apparatus receives the switching indication information.

After the first apparatus receives the switching indication information from the second apparatus, the first apparatus performs air interface switching. For example, the first apparatus switches from an intelligent air interface to a conventional air interface, or the first apparatus switches from a conventional air interface to an intelligent air interface.

S604: The first apparatus and the second apparatus perform data transmission through the conventional air interface/intelligent air interface.

As shown in FIG. 6, there may be a waste of transmission resources and a decrease in transmission efficiency before and after air interface switching. To resolve these problems, embodiments of this application provide the following solutions.

FIG. 7 shows a communication method according to an embodiment of this application. The method includes but is not limited to the following steps.

Step S701: A first apparatus obtains indication information.

The first apparatus may be a terminal device or a network device. In an example, when the first apparatus is a terminal device, that the first apparatus obtains the indication information may be that the first apparatus receives the indication information from a second apparatus. The second apparatus may be a network device. Optionally, before the first apparatus receives the indication information from the second apparatus, the first apparatus sends a request message to the second apparatus. The request message is for requesting enabling. Correspondingly, after receiving the request message, the second apparatus sends the indication information to the first apparatus. In another example, when the first apparatus is a network device, that the first apparatus obtains the indication information may be understood as that the first apparatus determines the indication information, and the indication information is determined by the network device. In another example, when the first apparatus is a first terminal device, and the second apparatus is a second terminal device, that the first apparatus obtains the indication information may be understood as that the first apparatus obtains the indication information from a network device, and the indication information is determined by the network device.

The indication information indicates an enable mode of a first air interface, and the enable mode may include one or more of the following: a non-retransmission enable mode, a retransmission enable mode, or a hybrid automatic repeat request (hybrid automatic repeat request, HARQ) enable mode. The first air interface may be an intelligent air interface.

The non-retransmission enable mode, the retransmission enable mode, and the HARQ enable mode are determined based on one or more of the following: real-time performance of air interface transmission, statistical performance of air interface transmission, or an artificial intelligence (artificial intelligence, AI) resource state. The non-retransmission enable mode may be determined by the network device or the terminal device based on the statistical performance of air interface transmission or the AI resource state. The statistical performance of air interface transmission may be decoding performance in a period of time or a transmission rate in a period of time. The period of time may be specified in a protocol, configured by the network device, or reported by the terminal device. This is not limited in embodiments of this application. The AI resource state may include a computing resource or a buffer resource. In an example, when the decoding performance in the period of time reaches a threshold 1, the transmission rate in the period of time reaches a threshold 2, the computing resource reaches a threshold 3, and the buffer resource reaches a threshold 4, it is determined that the enable mode of the first air interface is the non-retransmission enable mode. The retransmission enable mode may be determined by the network device or the terminal device based on the real-time performance of air interface transmission or the AI resource state. The real-time performance of air interface transmission may be real-time decoding performance or a real-time transmission rate. The HARQ enable mode may be determined by the network device or the terminal device based on the real-time performance of air interface transmission or the AI resource state.

The indication information may be carried in physical layer downlink control information (downlink control information, DCI), a MAC control element (control element, CE), or RRC signaling. The indication information further includes one or more of the following: HARQ version information, new data indication (new data indication, NDI) information, air interface category information, or transmission configuration information. It should be noted that the HARQ version information, the NDI information, the air interface category information, or the transmission configuration information may be carried in another message or other information. This is not limited in embodiments of this application. The HARQ version information may include redundancy version (redundancy version, RV) information. The NDI information may include new transmission or retransmission indication information. The air interface category information may include the first air interface or a second air interface. The first air interface or the second air interface is a configuration of an air interface after enabling, which may be also understood as that the first air interface or the second air interface is an air interface selected for air interface transmission after enabling. The first air interface may be an intelligent air interface, and the second air interface may be a conventional air interface. The transmission configuration information may include time-frequency resource information or modulation and coding scheme (modulation and coding scheme, MCS) information. The transmission configuration information may further include offset indication information of transmission configuration information before enabling, that is, the transmission configuration information may be determined based on the offset indication information and the transmission configuration information before enabling. The transmission configuration information may be transmission configuration information after enabling, which is new transmission configuration information compared with the transmission configuration information before enabling.

For example, the indication information is carried in DCI, and the DCI may be DCI scrambled by using a specific radio network temporary identity (radio network temporary identity, RNTI). One piece of DCI corresponds to one HARQ process (Process), which may also be understood as that one piece of DCI is separately indicated for each HARQ process. The indication information is carried in the DCI, and the indication information may include the HARQ version information or the NDI information. The HARQ version information or the NDI information may implicitly indicate the enable mode of the first air interface. The indication information is carried in the DCI, and the indication information may further include the air interface category information.

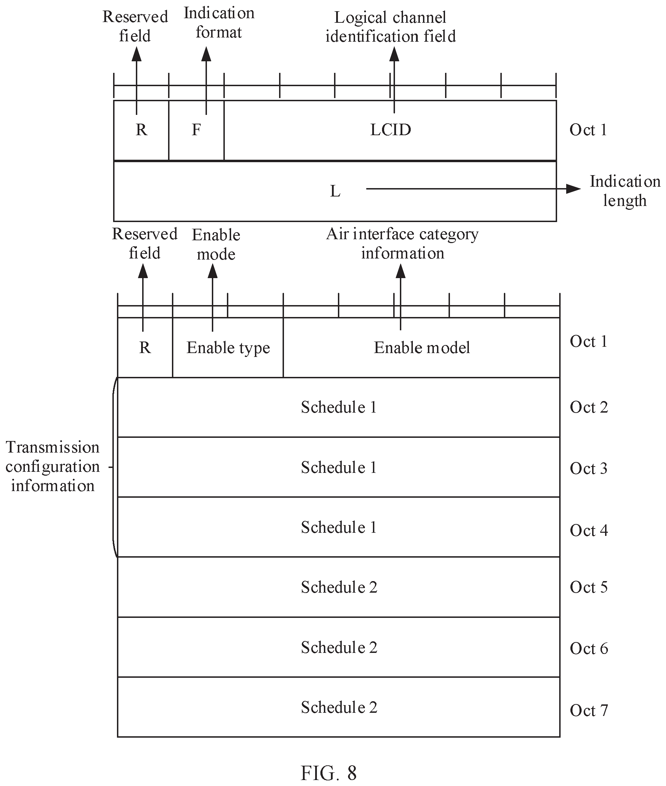

For example, the indication information is carried in a MAC CE, and the MAC CE includes a specific logical channel identification (logical channel identification, LCID) field. FIG. 8 shows a signaling format of a MAC CE according to an embodiment of this application. The MAC CE may include air interface category information or transmission configuration information. An air interface corresponding to the air interface category information includes at least one processing module, and the air interface category information is independently indicated by each processing module in the at least one processing module, or is jointly indicated by the at least one processing module. The processing module may be a specific module or a plurality of modules that are in a neural network-based transceiver machine and that are replaced by the neural network during sending or receiving processing. For example, the processing module may be configured to optimize channel coding, modulation, waveform, pilot, and other modules during transceiver signal processing. The air interface category information may be indicated by using a bitmap (bitmap) or an index (index). For example, 1 bit may be used to indicate an intelligent air interface or a conventional air interface. In an example, the air interface category information is independently indicated by each processing module in the at least one processing module. The air interface category information is indicated by using a bitmap. The air interface category information is 110. "1" at a $1^{st}$ position indicates that an air interface selected for air interface transmission in a channel coding module is an intelligent air interface, that is, an air interface after enabling is an intelligent air interface. "1" at a $2^{nd}$ position indicates that an air interface selected for air interface transmission in a modulation module is an intelligent air interface, that is, an air interface after enabling is an intelligent air interface. "0" at a $3^{rd}$ position indicates that an air interface selected for air interface transmission in a waveform module is a conventional air interface, that is, an air interface after enabling is a conventional air interface. In another example, the air interface category information is jointly indicated by the at least one processing module, the air interface category information is indicated by using an index (index). The air interface category information may be 0, 1, ..., and 7, respectively indicating indexes of possible combinations in which modules are intelligent air interfaces or conventional air interfaces. For example, when the air interface category information is 7, it indicates that the at least one processing module, for example, three processing modules, includes a channel coding module, a modulation module, and a waveform module. The channel coding module, the modulation module, and the waveform module jointly indicate that an air interface selected for air interface transmission is an intelligent air interface, that is, an air interface after enabling is an intelligent air interface. When the air interface category information is 6, it indicates that the at least one processing module, for example, three processing modules, includes a channel coding module, a modulation module, and a waveform module. The channel coding module and the modulation module jointly indicate that an air interface selected for air interface transmission is an intelligent air interface, and the waveform module jointly indicates that an air interface selected for air interface transmission is a conventional air interface. By analogy, when the air interface category information is 0, it indicates that the at least one processing module, for example, three processing modules, includes a channel coding module, a modulation module, and a waveform module. The channel coding module, the modulation module, and the waveform module jointly indicate that an air interface selected for air interface transmission is a conventional air interface, that is, an air interface after enabling is a conventional air interface.

Step S702: The first apparatus sends first information to the second apparatus based on the indication information.

The first apparatus sends the first information to the second apparatus based on the indication information in the following three cases:

Case 1: The enable mode includes the non-retransmission enable mode, and the first information includes new data information transmitted after enabling, that is, the enable mode of the first air interface indicated by the indication information is the retransmission enable mode. The first apparatus sends the first information to the second apparatus based on the indication information, and the first information includes the new data information transmitted after enabling. Optionally, the new data information transmitted after enabling may include RV information. Optionally, the new data information transmitted after enabling may be understood as re-encoded data information compared with data information transmitted before enabling.

Optionally, the enabling may be understood as a change of an air interface state or air interface switching, for example, switching from an intelligent air interface to a conventional air interface, switching from a conventional air interface to an intelligent air interface, or switching from an intelligent air interface to an intelligent air interface. Enabling includes one or more of the following: activation of the first air interface, deactivation of the first air interface, switching from the first air interface to the second air interface, or fallback from the first air interface to the second air interface, where the first air interface is different from the second air interface. In an example, the first air interface may be an intelligent air interface, and the second air interface may be a conventional air interface. In another example, the first air interface may be a conventional air interface, and the second air interface may be an intelligent air interface. In another example, the first air interface may be an intelligent air interface in a processing module 1, and the second air interface may be a conventional air interface in the processing module 1. In another example, the first air interface may be a first intelligent air interface, the second air interface may be a second intelligent air interface, and the first intelligent air interface is different from the second intelligent air interface. Case 1: The first intelligent air interface includes at least one processing module, and the second intelligent air interface includes at least one processing module. The first intelligent air interface and the second intelligent air interface include different quantities of processing modules. For example, the first intelligent air interface includes two processing modules, and the second intelligent air interface includes three processing modules. Case 2: The first intelligent air interface and the second intelligent air interface include a same quantity of processing modules, but a parameter in at least one processing module of the first intelligent air interface is different from that of the second intelligent air interface. For related explanations of the processing module, refer to the explanations of the processing module in step S601. Details are not described herein again. In an example, it is assumed that air interface transmission before enabling is performed through an intelligent air interface, and enabling includes switching from the first air interface to the second air interface, for example, switching from the intelligent air interface to a conventional air interface. In this case, that the enable mode includes the non-retransmission enable mode, and the first information includes the new data information transmitted after enabling may be understood as that the enable mode includes the non-retransmission enable mode, and the first information includes new data information transmitted after switching from the intelligent air interface to the conventional air interface. The first apparatus may send the new data information to the second apparatus through the conventional air interface based on the indication information.

It should be noted that enabling according to embodiments of this application may also be referred to as air interface intelligence enabling. This is not limited in embodiments of this application.

Optionally, the first apparatus may send the first information to the second apparatus based on the indication information and the transmission configuration information. The transmission configuration information may be understood as transmission configuration information after enabling, which is new transmission configuration information compared with transmission configuration information before enabling. Correspondingly, the second apparatus may receive the first information from the first apparatus based on the indication information and the transmission configuration information. Optionally, the second apparatus may decode the first information based on the transmission configuration information. Optionally, the transmission configuration information may be reconfigured by the network device before the indication information is obtained or before the first apparatus sends the first information.

Optionally, before the first apparatus sends the first information to the second apparatus based on the indication information, the first apparatus resets a HARQ process state, and the first apparatus may further clear a sending buffer. Correspondingly, before the second apparatus receives the first information from the first apparatus based on the indication information, the second apparatus resets a HARQ process state, and the second apparatus may further clear a receiving buffer.

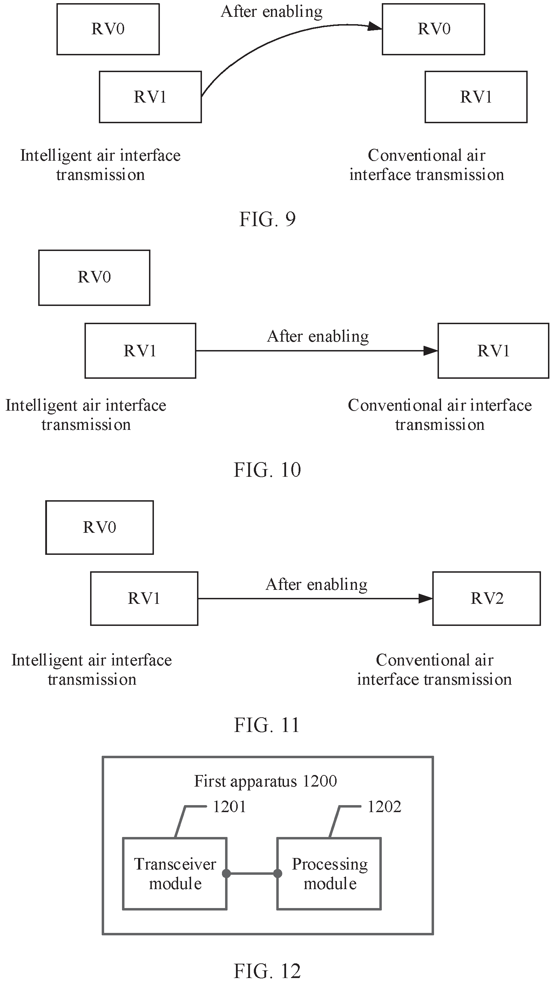

In an example, FIG. 9 is a diagram of air interface transmission before and after enabling according to an embodiment of this application. It is assumed that before enabling, a first apparatus transmits RV0 and RV1 through an intelligent air interface, where RV0 represents redundancy version information 0, RV1 represents redundancy version information 1, and a second apparatus fails to decode RV1. In this case, the first apparatus obtains indication information, where an enable mode indicated by the indication information includes a non-retransmission enable mode. Correspondingly, the first apparatus performs enabling. Enabling includes switching from a first air interface to a second air interface, for example, switching from an intelligent air interface to a conventional air interface. Then, the first apparatus sends first information to the second apparatus through the conventional air interface based on the indication information, where the first information is re-encoded RV0, and the re-encoded RV0 may be understood as new data information transmitted after enabling. If the re-encoded RV0 fails to be decoded, the first apparatus may send re-encoded RV1 through the conventional air interface.

In the method, an air interface transmission mode is configured in the manner in which the enable mode includes the non-retransmission enable mode, thereby improving air interface intelligence flexibility. In addition, indicating a mechanism for air interface transmission after enabling can avoid a waste of resources, and improve transmission efficiency.

Case 2: The enable mode includes the retransmission enable mode, and the first information includes data information transmitted before enabling, that is, the enable mode indicated by the indication information is the retransmission enable mode. The first apparatus sends the first information to the second apparatus based on the indication information, and the first information includes the data information transmitted before enabling. Optionally, the data information transmitted before enabling may be RV information. For descriptions of enabling, refer to the explanations of enabling in Case 1. Details are not described herein again. In an example, it is assumed that air interface transmission before enabling is performed through an intelligent air interface, and enabling includes switching from the first air interface to the second air interface, for example, switching from the intelligent air interface to a conventional air interface. In this case, that the enable mode includes the retransmission enable mode, and the first information includes the data information transmitted before enabling may be understood as that the enable mode includes the retransmission enable mode, and the first information includes data information transmitted before enabling and transmitted after switching from the intelligent air interface to the conventional air interface. The first apparatus may send the data information transmitted before enabling to the second apparatus through the conventional air interface based on the indication information. Optionally, the data information transmitted before enabling may be understood as data information that is not re-encoded after enabling.

Optionally, before the first apparatus sends the first information to the second apparatus based on the indication information, the first apparatus freezes a HARQ process state, and the first apparatus may further maintain a sending buffer. Correspondingly, before the second apparatus receives the first information from the first apparatus based on the indication information, the second apparatus freezes a HARQ process state, and the second apparatus may further maintain a receiving buffer.

Optionally, the first apparatus may send the first information to the second apparatus based on the indication information and the transmission configuration information. The transmission configuration information may be transmission configuration information before enabling, that is, the first apparatus reuses the transmission configuration information before enabling for air interface transmission. Alternatively, the transmission configuration information may be transmission configuration information after enabling, which is new transmission configuration information compared with transmission configuration information before enabling. Correspondingly, the second apparatus performs combined decoding processing on the first information and second information, where the second information is data information received before enabling. The data information received before enabling may be data information that is successfully received but not decoded before enabling. Optionally, after combined decoding processing on the first information and second information, the second apparatus may resend a decoding result to the first apparatus based on the frozen HARQ process state. The decoding result includes an acknowledgement (acknowledgement, ACK) or a negative acknowledgement (negative acknowledgement, NACK).

In an example, FIG. 10 is another diagram of air interface transmission before and after enabling according to an embodiment of this application. It is assumed that before enabling, a first apparatus transmits RV0 and RV1 through an intelligent air interface, where RV0 represents redundancy version information 0, RV1 represents redundancy version information 1, and a second apparatus fails to decode RV1. In this case, the first apparatus obtains indication information, where an enable mode indicated by the indication information includes a retransmission enable mode. Correspondingly, the first apparatus performs enabling. Enabling includes switching from a first air interface to a second air interface, for example, switching from an intelligent air interface to a conventional air interface. Then, the first apparatus sends first information to the second apparatus through the conventional air interface based on the indication information, where the first information is RV1, and RV1 may be understood as data information transmitted before enabling. Optionally, the second apparatus may receive the first information, namely, RV1, through the conventional air interface based on the indication information, and then perform combined decoding processing on the first information, namely, RV1, and second information, namely, RV0. The second information, namely, RV0, may be understood as data information received before enabling.

In the method, an air interface transmission mode is configured in the manner in which the enable mode includes the retransmission enable mode, thereby improving air interface intelligence flexibility. In addition, in the manner in which the first information includes the data information transmitted before enabling, data before and after enabling can be repeatedly transmitted, thereby improving data transmission efficiency. In addition, indicating a mechanism for air interface transmission after enabling can avoid a waste of resources, and improve transmission efficiency.

Case 3: The enable mode includes the HARQ enable mode, and the first information is data information related to data information transmitted before enabling, that is, the enable mode indicated by the indication information is the HARQ enable mode. The first apparatus sends the first information to the second apparatus based on the indication information, and the first information is the data information related to the data information transmitted before enabling. Optionally, the data information related to the data information transmitted before enabling may be RV information. For descriptions of enabling, refer to the explanations of enabling in Case 1. Details are not described herein again. In an example, it is assumed that air interface transmission before enabling is performed through an intelligent air interface, and enabling includes switching from the first air interface to the second air interface, for example, switching from the intelligent air interface to a conventional air interface. In this case, that the enable mode includes the HARQ enable mode, and the first information is data information related to data information transmitted before enabling may be understood as that the enable mode includes the HARQ enable mode, and the first information is the data information that is related to the data information transmitted before enabling and that is transmitted after switching from the intelligent air interface to the conventional air interface. The first apparatus may send the data information related to the data information transmitted before enabling to the second apparatus through the conventional air interface based on the indication information.

Optionally, the related data information is first redundancy version information, the data information transmitted before enabling is second redundancy version information, the first redundancy version information is different from the second redundancy version information, and the first redundancy version information and the second redundancy version information belong to a same encoded codeword. That the first redundancy version information and the second redundancy version information belong to the same encoded codeword may be understood as that a channel encoder encodes information bits to obtain encoded bit data, and the encoded bit data includes the first redundancy version information and the second redundancy version information. Optionally, the first redundancy version information and the second redundancy version information may be different encoded bits in a same buffer (buffer).

It should be noted that, in this embodiment of this application, the redundancy version information may be a redundancy version of channel encoding, or may be a symbol. When the redundancy version information is the redundancy version of channel encoding, the intelligent air interface may include channel encoding and subsequent intelligent modulation. The subsequent intelligent modulation may be understood as that the neural network replaces the modulation module during sending or receiving processing in a neural network-based transceiver machine. In this case, enabling may refer to switching between intelligent modulation and conventional modulation, and channel encoding remains unchanged before and after enabling. When the redundancy version information refers to a symbol, for example, channel encoding and modulation are jointly completed in a conventional manner or over the neural network, enabling may refer to switching of a module like a pre-encoding module after modulation. Different symbols are transmitted before and after switching, and combined receiving is performed.

Optionally, before the first apparatus sends the first information to the second apparatus based on the indication information, the first apparatus updates a HARQ process state, and the first apparatus may further maintain a sending buffer. Correspondingly, before the second apparatus receives the first information from the first apparatus based on the indication information, the second apparatus updates a HARQ process state, and the second apparatus may further maintain a receiving buffer.

Optionally, the first apparatus may send the first information to the second apparatus based on the indication information and the transmission configuration information. The transmission configuration information may be transmission configuration information before enabling, or may be transmission configuration information after enabling. For details, refer to related descriptions of the transmission configuration information in Case 2. Details are not described herein again. Correspondingly, the second apparatus performs combined decoding processing on the first information and second information, where the second information is data information received before enabling. The data information received before enabling may be data information that is successfully received but not decoded before enabling. Optionally, after combined decoding processing on the first information and second information, the second apparatus may resend a decoding result to the first apparatus based on the updated HARQ process state. The decoding result includes an ACK or a NACK.

In an example, FIG. 11 is another diagram of air interface transmission before and after enabling according to an embodiment of this application. It is assumed that an encoder performs channel encoding to obtain encoded bit data, and buffers the encoded bit data in a buffer (buffer), only a part of the encoded bit data is transmitted each time. The part is represented by redundancy version information. For example, the bit data includes 30 bits, RV0 is the first 10 bits, RV1 is the middle 10 bits, and RV2 is the last 10 bits. Before enabling, a first apparatus transmits RV0 and RV1 through an intelligent air interface, and a second apparatus fails to decode the data. In this case, the first apparatus obtains indication information, where an enable mode indicated by the indication information includes a HARQ enable mode. Correspondingly, the first apparatus performs enabling, where enabling includes switching from a first air interface to a second air interface, for example, switching from the intelligent air interface to a conventional air interface. Then, the first apparatus sends first information to the second apparatus through the conventional air interface based on the indication information. The first information is RV2, and RV2 may be understood as data information related to data information transmitted before enabling. Optionally, the second apparatus may receive the first information, namely, RV2, through the intelligent air interface based on the indication information, and then perform combined decoding processing on the first information, namely, RV2, and second information, namely, RV1 and RV0. The second information, namely, RV1 and RV0, may be understood as the data information received before enabling.

Step S703: The second apparatus receives the first information based on the indication information.

In the method, an air interface transmission mode is configured in the manner in which the enable mode includes the HARQ enable mode, thereby improving air interface intelligence flexibility. In addition, indicating a mechanism for air interface transmission after enabling can avoid a waste of resources, and improve transmission efficiency. Step S703: The second apparatus receives the first information from the first apparatus based on the indication information.

In the method described in FIG. 7, in the manner in which the first apparatus obtains the indication information, and sends the first information to the second apparatus based on the indication information, the first apparatus determines, based on different content included in the indication information and different content of the sent first information, a mechanism for air interface transmission, thereby avoiding a waste of resources, and improving transmission efficiency.

The method in embodiments of this application is described in detail above. The following describes the first apparatus and the second apparatus provided in embodiments of this application.

FIG. 12 is a diagram of a structure of a first apparatus 1200 according to an embodiment of this application. The first apparatus may be configured to perform the process performed by the first apparatus in the embodiment shown in FIG. 7. For details, refer to the related descriptions in the foregoing method embodiments.

The first apparatus 1200 includes a transceiver module 1201 and a processing module 1202.

The processing module 1202 is configured to perform data processing. The transceiver module 1201 may implement a corresponding communication function. The transceiver module 1201 may also be referred to as a communication interface or a communication module.

Optionally, the first apparatus 1200 may further include a storage module. The storage module may be configured to store instructions and/or data. The processing module 1202 may read the instructions and/or the data in the storage module, to enable the first apparatus to implement the foregoing method embodiments.

The first apparatus 1200 may be configured to perform an action performed by the first apparatus in the foregoing method embodiments. The first apparatus 1200 may be a first apparatus or a component that may be configured in a first apparatus. The processing module 1202 is configured to perform a processing-related operation on a first apparatus side in the foregoing method embodiments. The transceiver module 1201 is configured to perform a communication-related operation on the first apparatus side in the foregoing method embodiments.

Optionally, the transceiver module 1201 may include a sending module and a receiving module. The sending module is configured to perform the sending operation in the foregoing method embodiments. The receiving module is configured to perform the receiving operation in the foregoing method embodiments.

It should be noted that the first apparatus 1200 may include a sending module, but does not include a receiving module. Alternatively, the first apparatus 1200 may include a receiving module, but does not include a sending module. This may be specifically determined depending on whether the foregoing solution performed by the first apparatus 1200 includes a sending action and a receiving action.

Optionally, the first apparatus 1200 is configured to perform an action performed by the first apparatus in the embodiment shown in FIG. 7. For details, refer to the related descriptions in the embodiment shown in FIG. 7. Details are not described herein again. For example, the first apparatus 1200 is configured to perform the following solution.

The processing module 1202 is configured to obtain indication information, where the indication information indicates an enable mode of a first air interface, and the enable mode includes one or more of the following: a non-retransmission enable mode, a retransmission enable mode, or a hybrid automatic repeat request HARQ enable mode. The transceiver module 1201 is configured to send first information to a second apparatus based on the indication information.

In a possible implementation, the enable mode includes the non-retransmission enable mode, and the first information includes new data information transmitted after enabling.

In another possible implementation, the processing module 1202 is further configured to reset a HARQ process state.

In another possible implementation, the enable mode includes the retransmission enable mode, and the first information includes data information transmitted before enabling.

In another possible implementation, the processing module 1202 is further configured to freeze a HARQ process state.

In another possible implementation, the enable mode includes the HARQ enable mode, and the first information is data information related to data information transmitted before enabling.

In another possible implementation, the related data information includes first redundancy version information, the data information transmitted before enabling includes second redundancy version information, the first redundancy version information is different from the second redundancy version information, and the first redundancy version information and the second redundancy version information belong to a same encoded codeword.

In another possible implementation, the processing module 1202 is further configured to update a HARQ process state.

In another possible implementation, enabling includes one or more of the following: activation of the first air interface, deactivation of the first air interface, switching from the first air interface to a second air interface, or fallback from the first air interface to the second air interface, where the first air interface is different from the second air interface.

In another possible implementation, the first air interface is an intelligent air interface, and the second air interface is a conventional air interface; or the first air interface is a conventional air interface, and the second air interface is an intelligent air interface; or the first air interface is a first intelligent air interface, and the second air interface is a second intelligent air interface.

In another possible implementation, the indication information further includes one or more of the following: HARQ version information, new data indication NDI information, air interface category information, or transmission configuration information.

In another possible implementation, the indication information is carried in physical layer downlink control information DCI, a media access control control element MAC CE, or radio resource control RRC signaling.

In another possible implementation, the non-retransmission enable mode, the retransmission enable mode, and the HARQ enable mode are determined based on one or more of the following: real-time performance of air interface transmission, statistical performance of air interface transmission, or an artificial intelligence AI resource state.

It should be understood that a specific process in which the modules perform the foregoing corresponding process has been described in detail in the foregoing method embodiment. For brevity, details are not described herein again.

The processing module 1202 in the foregoing embodiments may be implemented by at least one processor or processor-related circuit. The transceiver module 1201 may be implemented by a transceiver or a transceiver-related circuit. The transceiver module 1201 may also be referred to as a communication module or a communication interface. The storage module may be implemented by at least one memory.

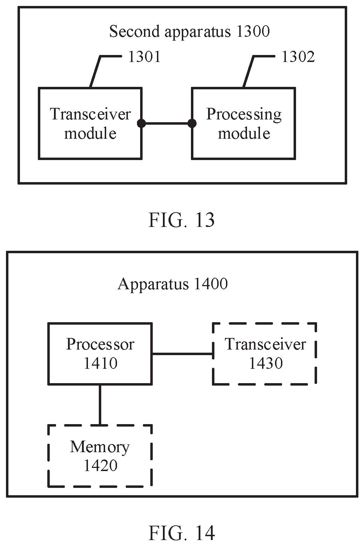

FIG. 13 is a diagram of a structure of a second apparatus 1300 according to an embodiment of this application. The second apparatus may be configured to perform the process performed by the second apparatus in the embodiment shown in FIG. 7. For details, refer to the related descriptions in the foregoing method embodiments.

The second apparatus 1300 includes a transceiver module 1301 and a processing module 1302.

The processing module 1302 is configured to perform data processing. The transceiver module 1301 may implement a corresponding communication function. The transceiver module 1301 may also be referred to as a communication interface or a communication module.

Optionally, the second apparatus 1300 may further include a storage module. The storage module may be configured to store instructions and/or data. The processing module 1302 may read the instructions and/or the data in the storage module, to enable the second apparatus to implement the foregoing method embodiments.

The second apparatus 1300 may be configured to perform an action performed by the second apparatus in the foregoing method embodiments. The second apparatus 1300 may be a second apparatus or a component that may be configured in a second apparatus. The processing module 1302 is configured to perform a processing-related operation on a second apparatus side in the foregoing method embodiments. The transceiver module 1301 is configured to perform a communication-related operation on the second apparatus side in the foregoing method embodiments.

Optionally, the transceiver module 1301 may include a sending module and a receiving module. The sending module is configured to perform the sending operation in the foregoing method embodiments. The receiving module is configured to perform the receiving operation in the foregoing method embodiments.

It should be noted that the second apparatus 1300 may include a sending module, but does not include a receiving module. Alternatively, the second apparatus 1300 may include a receiving module, but does not include a sending module. This may be specifically determined depending on whether the foregoing solution performed by the second apparatus 1300 includes a sending action and a receiving action.

Optionally, the second apparatus 1300 is configured to perform an action performed by the second apparatus in the embodiment shown in FIG. 7. For details, refer to the related descriptions in the embodiment shown in FIG. 7. Details are not described herein again. For example, the second apparatus 1300 is configured to perform the following solution.

The processing module 1302 is configured to obtain indication information, where the indication information indicates an enable mode of a first air interface, and the enable mode includes one or more of the following: a non-retransmission enable mode, a retransmission enable mode, or a hybrid automatic repeat request HARQ enable mode. The transceiver module 1301 is configured to receive first information from a first apparatus based on the indication information.

In a possible implementation, the enable mode includes the non-retransmission enable mode, and the first information includes new data information transmitted after enabling.

In another possible implementation, the processing module 1302 is further configured to reset a HARQ process state.

In another possible implementation, the enable mode includes the retransmission enable mode, and the first information includes data information transmitted before enabling.

In another possible implementation, the processing module 1302 is further configured to freeze a HARQ process state.

In another possible implementation, the enable mode includes the HARQ enable mode, and the first information is data information related to data information transmitted before enabling.

In another possible implementation, the related data information includes first redundancy version information, the data information transmitted before enabling includes second redundancy version information, the first redundancy version information is different from the second redundancy version information, and the first redundancy version information and the second redundancy version information belong to a same encoded codeword.

In another possible implementation, the processing module 1302 is further configured to update a HARQ process state.

In another possible implementation, the processing module 1302 is further configured to perform combined decoding processing on the first information and second information, where the second information is data information received before enabling.

In another possible implementation, enabling includes one or more of the following: activation of the first air interface, deactivation of the first air interface, switching from the first air interface to a second air interface, or fallback from the first air interface to the second air interface, where the first air interface is different from the second air interface.

In another possible implementation, the first air interface is an intelligent air interface, and the second air interface is a conventional air interface; or the first air interface is a conventional air interface, and the second air interface is an intelligent air interface; or the first air interface is a first intelligent air interface, and the second air interface is a second intelligent air interface.

In another possible implementation, the indication information further includes one or more of the following: HARQ version information, new data indication NDI information, air interface category information, or transmission configuration information.

In another possible implementation, the indication information is carried in physical layer downlink control information DCI, a media access control control element MAC CE, or radio resource control RRC signaling.

In another possible implementation, the non-retransmission enable mode, the retransmission enable mode, and the HARQ enable mode are determined based on one or more of the following: real-time performance of air interface transmission, statistical performance of air interface transmission, or an artificial intelligence AI resource state.

It should be understood that a specific process in which the modules perform the foregoing corresponding process has been described in detail in the foregoing method embodiment. For brevity, details are not described herein again.

The processing module 1302 in the foregoing embodiments may be implemented by at least one processor or processor-related circuit. The transceiver module 1301 may be implemented by a transceiver or a transceiver-related circuit. The transceiver module 1301 may also be referred to as a communication module or a communication interface. The storage module may be implemented by at least one memory.

FIG. 14 is a diagram of a structure of an apparatus 1400 according to an embodiment of this application. The apparatus 1400 includes a processor 1410. The processor 1410 is coupled to a memory 1420. The memory 1420 is configured to store a computer program or instructions and/or data. The processor 1410 is configured to execute the computer program or the instructions and/or the data stored in the memory 1420, to perform the method in the foregoing method embodiments. The apparatus 1400 is configured to implement an operation performed by the first apparatus or the second apparatus in the foregoing method embodiments.

Optionally, the apparatus 1400 includes one or more processors 1410.

Optionally, as shown in FIG. 14, the apparatus 1400 may further include a memory 1420.

Optionally, the apparatus 1400 includes one or more memories 1420.

Optionally, the memory 1420 and the processor 1410 may be integrated together, or separately disposed.

Optionally, as shown in FIG. 14, the apparatus 1400 may further include a transceiver 1430. The transceiver 1430 is configured to receive and/or send a signal. For example, the processor 1410 is configured to control the transceiver 1430 to receive and/or send the signal.

An embodiment of this application further provides an apparatus 1500. The apparatus 1500 may be a terminal device, a processor in a terminal device, or a chip. The apparatus 1500 may be configured to perform an operation performed by the first apparatus or the second apparatus in the foregoing method embodiments.

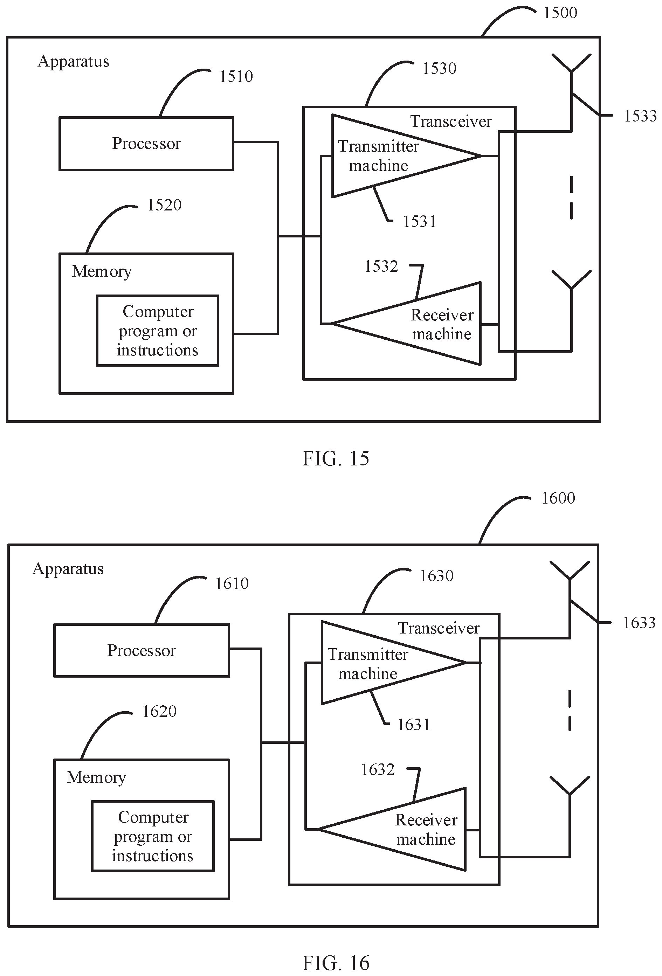

When the apparatus 1500 is the terminal device, FIG. 15 is a diagram of a simplified structure of the terminal device. As shown in FIG. 15, the terminal device includes a processor, a memory, and a transceiver. The memory may store a computer program or instructions. The transceiver includes a transmitter machine 1531, a receiver machine 1532, a radio frequency circuit (not shown in the figure), an antenna 1533, and an input/output apparatus (not shown in the figure).

The processor is mainly configured to: process a communication protocol and communication data, control the terminal device, execute a software program, process data of the software program, and the like.

The memory is mainly configured to store the software program and data.

The radio frequency circuit is mainly configured to: perform conversion between a baseband signal and a radio frequency signal, and process the radio frequency signal.

The antenna is mainly configured to receive/send a radio frequency signal in a form of an electromagnetic wave.

The input/output apparatus may include a touchscreen, a display, a keyboard, or the like. The input/output apparatus is mainly configured to receive data input by a user and output data to the user. It should be noted that some types of terminal devices may have no input/output apparatus.

When needing to send data, after performing baseband processing on to-be-sent data, the processor outputs a baseband signal to the radio frequency circuit. Then, the radio frequency circuit performs radio frequency processing on the baseband signal and then sends a radio frequency signal to the outside in a form of an electromagnetic wave through the antenna. When data is sent to the terminal device, the radio frequency circuit receives the radio frequency signal through the antenna. The radio frequency circuit converts the radio frequency signal into a baseband signal, and outputs the baseband signal to the processor. The processor converts the baseband signal into data and processes the data. For ease of description, FIG. 15 shows only one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have a sending/receiving function may be considered as a transceiver module of the terminal device, and the processor that has a processing function may be considered as a processing module of the terminal device.

As shown in FIG. 15, the terminal device includes a processor 1510, a memory 1520, and a transceiver 1530. The processor 1510 may also be referred to as a processing unit, a processing board, a processing module, a processing apparatus, or the like. The transceiver 1530 may also be referred to as a transceiver unit, a transceiver machine, a transceiver apparatus, or the like.

Optionally, a component that is in the transceiver 1530 and that is configured to implement a receiving function is considered as a receiving module, and a component that is in the transceiver 1530 and that is configured to implement a sending function is considered as a sending module. In other words, the transceiver 1530 includes a receiver and a transmitter. The transceiver may also be sometimes referred to as a transceiver machine, a transceiver module, a transceiver circuit, or the like. The receiver may also be sometimes referred to as a receiver machine, a receiving module, a receiver circuit, or the like. The transmitter may also be sometimes referred to as a transmitter machine, a transmitting module, a transmitter circuit, or the like.

The processor 1510 is configured to perform a processing action on the first apparatus side or the second apparatus side in the embodiment shown in FIG. 7. The transceiver 1530 is configured to perform a receiving/sending action on the first apparatus side or the second apparatus side in the embodiment shown in FIG. 7.

It should be understood that FIG. 15 is merely an example rather than a limitation. The terminal device including the transceiver module and the processing module may not depend on the structure shown in FIG. 12, FIG. 13, or FIG. 15.

When the apparatus 1500 is a chip, the chip includes a processor, a memory, and a transceiver. The transceiver may be an input/output circuit or a communication interface. The processor may be a processing module, a microprocessor, or an integrated circuit integrated on the chip. A sending operation of the first apparatus or the second apparatus in the foregoing method embodiments may be understood as an output of the chip, and a receiving operation of the first apparatus or the second apparatus in the foregoing method embodiments may be understood as an input of the chip.

This application further provides an apparatus 1600. The apparatus 1600 may be a network device or a chip. The apparatus 1600 may be configured to perform an operation performed by the first apparatus or the second apparatus in the embodiment shown in FIG. 7.

When the apparatus 1600 is a network device, for example, a base station, FIG. 16 is a diagram of a simplified structure of a base station. The base station includes a part 1610, a part 1620, and a part 1630.

The part 1610 is mainly configured to: perform baseband processing, control the base station, and the like. The part 1610 is usually a control center of the base station, may be usually referred to as a processor, and is configured to control the base station to perform a processing operation on the first apparatus side or the second apparatus side in the foregoing method embodiments.

The part 1620 is mainly configured to store a computer program or instructions and data.

The part 1630 is mainly configured to receive and send a radio frequency signal, and perform conversion between a radio frequency signal and a baseband signal. The part 1630 may be usually referred to as a transceiver module, a transceiver machine, a transceiver circuit, a transceiver, or the like. A transceiver module in the part 1630 may also be referred to as a transceiver machine, a transceiver, or the like, and includes an antenna 1633 and a radio frequency circuit (not shown in the figure). The radio frequency circuit is mainly configured to perform radio frequency processing. Optionally, in the part 1630, a component configured to implement a receiving function may be considered as a receiver machine, and a component configured to implement a sending function may be considered as a transmitter machine. In other words, the part 1630 includes a receiver machine 1632 and a transmitter machine 1631. The receiver machine may also be referred to as a receiving module, a receiver, a receiver circuit, or the like, and the transmitter machine may be referred to as a transmitting module, a transmitter, a transmitter circuit, or the like.

The part 1610 and the part 1620 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, the plurality of boards may share one or more processors, the plurality of boards share one or more memories, or the plurality of boards share one or more processors at the same time.

For example, in an implementation, the transceiver module in the part 1630 is configured to perform a receiving/sending-related process performed by the first apparatus or the second apparatus in the embodiment shown in FIG. 7. The processor in the part 1610 is configured to perform a processing-related process performed by the first apparatus or the second apparatus in the embodiment shown in FIG. 7.

It should be understood that FIG. 16 is merely an example rather than a limitation, and the network device including the processor, the memory, and the transceiver may not depend on the structure shown in FIG. 12, FIG. 13, or FIG. 16.

When the apparatus 1600 is a chip, the chip includes a transceiver, a memory, and a processor. The transceiver may be an input/output circuit or a communication interface. The processor is a processor, a microprocessor, or an integrated circuit integrated on the chip. A sending operation of the first apparatus or the second apparatus in the foregoing method embodiments may be understood as an output of the chip, and a receiving operation of the first apparatus or the second apparatus in the foregoing method embodiments may be understood as an input of the chip.

An embodiment of this application further provides a computer-readable storage medium. The computer-readable storage medium stores a computer program or instructions for implementing the method performed by the first apparatus or the second apparatus in the foregoing method embodiments.

For example, when the computer program or the instructions are executed by a computer, the computer is enabled to implement the method performed by the first apparatus or the second apparatus in the foregoing method embodiments.

An embodiment of this application further provides a computer program product including a computer program or instructions. When the computer program or the instructions are executed by a computer, the computer is enabled to implement the method performed by the first apparatus or the second apparatus in the foregoing method embodiments.

An embodiment of this application further provides a communication system. The communication system includes the first apparatus in the foregoing embodiments and the second apparatus in the foregoing embodiments. The first apparatus is configured to perform a part or all of the operations performed by the first apparatus in the foregoing method embodiments, and the second apparatus is configured to perform a part or all of the operations performed by the second apparatus in the foregoing method embodiments.

An embodiment of this application further provides a chip apparatus, including a processor, configured to invoke a computer program or instructions stored in a memory, so that the processor performs the method provided in the embodiment shown in FIG. 7.

In a possible implementation, an input of the chip apparatus corresponds to a receiving operation in any embodiment shown in FIG. 7, and an output of the chip apparatus corresponds to a sending operation in any embodiment shown in FIG. 7.

Optionally, the processor is coupled to the memory through an interface.

Optionally, the chip apparatus further includes the memory, and the memory stores the computer program or the computer instructions.

Any one of the foregoing processors may be a general-purpose central processing unit, a microprocessor, an application-specific integrated circuit (application-specific integrated circuit, ASIC), or one or more integrated circuits for controlling program execution of the method provided in any embodiment in FIG. 7. Any one of the foregoing memories may be a read-only memory (read-only memory, ROM), another type of static storage device that can store static information and instructions, a random access memory (random access memory, RAM), or the like.

It may be clearly understood by a person skilled in the art that for convenience and brevity of description, for explanation and beneficial effect of related content in any apparatus provided above, reference may be made to the foregoing corresponding method embodiments, and details are not described herein again.

In several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, all functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in this application essentially, the part contributing, or all or a part of the technical solutions may be implemented in a form of a software product. The computer software product is stored in a storage medium, and includes several instructions for instructing a computer device (which may be a personal computer, a server, or a network device) to perform all or a part of the steps of the methods in embodiments of this application. The foregoing storage medium includes any medium that can store program code, such as a USB flash drive, a removable hard disk, a ROM, a RAM, a magnetic disk, or an optical disc.

In conclusion, the foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to a part of technical features thereof, without departing from the scope of the technical solutions of embodiments of this application.

## Claims

1. A communication method, comprising:

   obtaining, by a first apparatus, indication information, wherein the indication information indicates an enable mode of a first air interface, and the enable mode comprises one or more of the following: a non-retransmission enable mode, a retransmission enable mode, or a hybrid automatic repeat request HARQ enable mode; and
   sending, by the first apparatus, first information to a second apparatus based on the indication information.

2. A communication method, comprising:

   obtaining, by a second apparatus, indication information, wherein the indication information indicates an enable mode of a first air interface, and the enable mode comprises one or more of the following: a non-retransmission enable mode, a retransmission enable mode, or a hybrid automatic repeat request HARQ enable mode; and
   receiving, by the second apparatus, first information from a first apparatus based on the indication information.

3. The method according to claim 1 or 2, wherein
   the enable mode comprises the non-retransmission enable mode, and the first information comprises new data information transmitted after enabling.

4. The method according to claim 3, wherein before sending, by the first apparatus, the first information to the second apparatus based on the indication information, the method further comprises:
resetting, by the first apparatus, a HARQ process state.

5. The method according to claim 3, wherein before receiving, by the second apparatus, the first information from the first apparatus based on the indication information, the method further comprises:
resetting, by the second apparatus, a HARQ process state.

6. The method according to claim 1 or 2, wherein
the enable mode comprises the retransmission enable mode, and the first information comprises data information transmitted before enabling.

7. The method according to claim 6, wherein before sending, by the first apparatus, the first information to the second apparatus based on the indication information, the method further comprises:
freezing, by the first apparatus, a HARQ process state.

8. The method according to claim 6, wherein before receiving, by the second apparatus, the first information from the first apparatus based on the indication information, the method further comprises:
freezing, by the second apparatus, a HARQ process state.

9. The method according to claim 1 or 2, wherein
the enable mode comprises the HARQ enable mode, and the first information is data information related to data information transmitted before enabling.

10. The method according to claim 9, wherein the related data information comprises first redundancy version information, the data information transmitted before enabling comprises second redundancy version information, the first redundancy version information is different from the second redundancy version information, and the first redundancy version information and the second redundancy version information belong to a same encoded codeword.

11. The method according to claim 9 or 10, wherein before sending, by the first apparatus, the first information to the second apparatus based on the indication information, the method further comprises:
updating, by the first apparatus, a HARQ process state.

12. The method according to claim 9 or 10, wherein before receiving, by the second apparatus, the first information from the first apparatus based on the indication information, the method further comprises:
updating, by the second apparatus, a HARQ process state.

13. The method according to any one of claims 6 to 12, wherein the method further comprises:
performing, by the second apparatus, combined decoding processing on the first information and second information, wherein the second information is data information received before enabling.

14. The method according to any one of claims 3 to 13, wherein
the enabling comprises one or more of the following: activation of the first air interface, deactivation of the first air interface, switching from the first air interface to a second air interface, or fallback from the first air interface to the second air interface, wherein the first air interface is different from the second air interface.

15. The method according to claim 14, wherein

the first air interface is an intelligent air interface, and the second air interface is a conventional air interface; or
the first air interface is a conventional air interface, and the second air interface is an intelligent air interface; or
the first air interface is a first intelligent air interface, the second air interface is a second intelligent air interface, and the first intelligent air interface is different from the second intelligent air interface.

16. The method according to any one of claims 1 to 15, wherein
the indication information further comprises one or more of the following: HARQ version information, new data indication NDI information, air interface category information, or transmission configuration information.

17. The method according to any one of claims 1 to 16, comprising:

the indication information is carried in physical layer downlink control information DCI, a media access control control element MAC CE, or radio resource control RRC signaling.

18. The method according to any one of claims 1 to 17, comprising:
the non-retransmission enable mode, the retransmission enable mode, and the HARQ enable mode are determined based on one or more of the following: real-time performance of air interface transmission, statistical performance of air interface transmission, or an artificial intelligence AI resource state.

19. A first apparatus, wherein the first apparatus comprises a processing module and a transceiver module, the processing module is configured to perform a processing operation in the method according to any one of claims 1, 3, 4, 6, 7, 9 to 11, and 14 to 18, and the transceiver module is configured to perform a receiving/sending operation in the method according to any one of claims 1, 3, 4, 6, 7, 9 to 11, and 14 to 18.

20. A second apparatus, wherein the second apparatus comprises a processing module and a transceiver module, the processing module is configured to perform a processing operation in the method according to any one of claims 2, 3, 5, 6, 8 to 10, and 12 to 18, and the transceiver module is configured to perform a receiving/sending operation in the method according to any one of claims 2, 3, 5, 6, 8 to 10, and 12 to 18.

21. An apparatus, wherein the apparatus comprises a processor, and the processor is configured to invoke a computer program or instructions stored in a memory to perform the method according to any one of claims 1 to 18.

22. A computer-readable storage medium, wherein the computer-readable storage medium stores a computer program or instructions, and when the computer program or the instructions are run on a processor, the method according to any one of claims 1 to 18 is implemented.

23. A computer program product, wherein the computer program product comprises a computer program or instructions, and when the computer program or the instructions are run on a computer, the method according to any one of claims 1 to 18 is implemented.

24. A communication system, wherein the communication system comprises a first apparatus and a second apparatus, the first apparatus is configured to perform the method according to any one of claims 1, 3, 4, 6, 7, 9 to 11, and 14 to 18, and the second apparatus is configured to perform the method according to any one of claims 2, 3, 5, 6, 8 to 10, and 12 to 18.

FIG. 1

FIG. 2A

FIG. 2B

Core network
device

AI module

NG | NG

Central unit CU 1 | Central unit CU 2

AI module | AI module

Xn

F1 | F1

Distributed unit
DU 1 | Distributed unit
DU 2

AI module | AI module

OAM

AI module

Air
interface | Air
interface

Terminal device

AI module

FIG. 2C

$w_0 x_0$

$w_1 x_1$

Neuron

$$y = f\left(\sum_{i=0}^{n} w_i x_i + b\right)$$

$y$

$w_n x_n$

FIG. 3

FIG. 4

EP 4 753 188 A1

```
┌──────────────┐    ┌──────────────────┐    ┌──────────────────┐    ┌──────────────────┐
│   Channel    │ →  │ Neural network   │ →  │ Inverse fast     │ →  │ Time–neural      │
│   encoding   │    │ modulation       │    │ Fourier          │    │ network          │
│              │    │ (NN-Mod)         │    │ transform (IFFT) │    │ (T-NN)           │
└──────────────┘    └──────────────────┘    └──────────────────┘    └──────────────────┘

┌──────────────┐    ┌──────────────────┐    ┌──────────────────┐    ┌──────────────────┐
│   Channel    │ ←  │ Neural network   │ ←  │ Inverse fast     │ ←  │ Time–neural      │
│   decoding   │    │ demodulation     │    │ Fourier          │    │ network          │
│              │    │ (NN-DeM)         │    │ transform (IFFT) │    │ (T-NN)           │
└──────────────┘    └──────────────────┘    └──────────────────┘    └──────────────────┘
```

(a)

```
┌──────────────────┐    ┌──────────────────┐    ┌──────────────────┐
│ Neural network   │ →  │ Inverse fast     │ →  │ Time–neural      │
│ encoding and     │    │ Fourier          │    │ network          │
│ modulation       │    │ transform (IFFT) │    │ (T-NN)           │
│ (NN-CoMo)        │    │                  │    │                  │
└──────────────────┘    └──────────────────┘    └──────────────────┘

┌──────────────────┐    ┌──────────────────┐    ┌──────────────────┐
│ Neural network   │ ←  │ Inverse fast     │ ←  │ Time–neural      │
│ decoding and     │    │ Fourier          │    │ network          │
│ demodulation     │    │ transform (IFFT) │    │ (T-NN)           │
│ (NN-DeCoMo)      │    │                  │    │                  │
└──────────────────┘    └──────────────────┘    └──────────────────┘
```

(b)

```
┌──────────────────┐    ┌──────────────────┐    ┌──────────────────┐
│ Generate a       │ →  │ Inverse fast     │ →  │ Time–neural      │
│ reference        │    │ Fourier          │    │ network          │
│ signal based on a│    │ transform (IFFT) │    │ (T-NN)           │
│ neural network   │    │                  │    │                  │
└──────────────────┘    └──────────────────┘    └──────────────────┘

┌──────────────────┐    ┌──────────────────┐    ┌──────────────────┐
│ Perform channel  │ ←  │ Inverse fast     │ ←  │ Time–neural      │
│ estimation based │    │ Fourier          │    │ network          │
│ on a             │    │ transform (IFFT) │    │ (T-NN)           │
│ neural network   │    │                  │    │                  │
└──────────────────┘    └──────────────────┘    └──────────────────┘
```

(c)

FIG. 5

| First apparatus | | Second apparatus |
|---|---|---|

S601: Perform data transmission
through an intelligent air interface/a
conventional air interface

S602: Send switching indication information

S603: Receive the switching indication
information

S604: Perform data transmission
through a conventional air interface/an
intelligent air interface

**FIG. 6**

| First apparatus | | Second apparatus |
|---|---|---|

S701: Obtain indication information

S702: Send first information based on the
indication information

S703: Receive the first information based
on the indication information

**FIG. 7**

FIG. 8

RV0    After enabling    RV0

RV1                       RV1

Intelligent air interface          Conventional air
transmission                       interface transmission

FIG. 9

RV0

RV1    After enabling    RV1

Intelligent air interface          Conventional air interface
transmission                       transmission

FIG. 10

RV0

RV1    After enabling    RV2

Intelligent air interface          Conventional air
transmission                       interface transmission

FIG. 11

First apparatus 1200

— 1201          — 1202

Transceiver          Processing
module               module

FIG. 12

Second apparatus 1300

1301

1302

Transceiver module

Processing module

FIG. 13

Apparatus 1400

Processor 1410

Transceiver 1430

Memory 1420

FIG. 14

FIG. 15

FIG. 16

## INTERNATIONAL SEARCH REPORT

| International application No. |
| --- |
| **PCT/CN2023/114736** |

| A. | CLASSIFICATION OF SUBJECT MATTER |
| --- | --- |

H04L1/1812(2023.01)i

According to International Patent Classification (IPC) or to both national classification and IPC

| B. | FIELDS SEARCHED |
| --- | --- |

Minimum documentation searched (classification system followed by classification symbols)

IPC: H04

Documentation searched other than minimum documentation to the extent that such documents are included in the fields searched

Electronic data base consulted during the international search (name of data base and, where practicable, search terms used)

3GPP, CNTXT, ENTXT, ENTXTC, VEN: 空口, 空中接口, 使能, 开启, 关闭, 激活, 禁用, 合并译码, 切换, 人工智能, 冗余版本, 重传, 重传使能, air interface?, disable, enable, active, deactive, open, close, forbidden, switch, AI, redundancy version, RV, repeat, ARQ, HARQ

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 113890695 A (VIVO MOBILE COMMUNICATION CO., LTD.) 04 January 2022 (2022-01-04) description, paragraphs 31-242 | 1-2, 6-8, 11-12, 14-24 |
| Y | CN 113890695 A (VIVO MOBILE COMMUNICATION CO., LTD.) 04 January 2022 (2022-01-04) description, paragraphs 31-242 | 3-5, 9, 13 |
| A | CN 113890695 A (VIVO MOBILE COMMUNICATION CO., LTD.) 04 January 2022 (2022-01-04) description, paragraphs 31-242 | 10 |
| Y | WO 2022006724 A1 (GUANGDONG OPPO MOBILE TELECOMMUNICATIONS CORP. LTD.) 13 January 2022 (2022-01-13) claims 1-6 | 3-5 |
| Y | CN 115529645 A (HUAWEI TECHNOLOGIES CO., LTD.) 27 December 2022 (2022-12-27) description, paragraphs 100-196, and figure 5 | 9,13 |

| ✓ | Further documents are listed in the continuation of Box C. | ✓ | See patent family annex. |
| --- | --- | --- | --- |

| * | Special categories of cited documents: | | "T" | later document published after the international filing date or priority date and not in conflict with the application but cited to understand the principle or theory underlying the invention |
| --- | --- | --- | --- | --- |
| "A" | document defining the general state of the art which is not considered to be of particular relevance | | | |
| "D" | document cited by the applicant in the international application | | "X" | document of particular relevance; the claimed invention cannot be considered novel or cannot be considered to involve an inventive step when the document is taken alone |
| "E" | earlier application or patent but published on or after the international filing date | | | |
| "L" | document which may throw doubts on priority claim(s) or which is cited to establish the publication date of another citation or other special reason (as specified) | | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | | |
| "P" | document published prior to the international filing date but later than the priority date claimed | | "&" | document member of the same patent family |

| Date of the actual completion of the international search | Date of mailing of the international search report |
| --- | --- |
| **21 December 2023** | **20 January 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/114736** |

### C. DOCUMENTS CONSIDERED TO BE RELEVANT

| Category* | Citation of document, with indication, where appropriate, of the relevant passages | Relevant to claim No. |
| --- | --- | --- |
| A | CN 111756480 A (HUAWEI TECHNOLOGIES CO., LTD.) 09 October 2020 (2020-10-09) entire document | 1-24 |
| A | WO 2022205023 A1 (HUAWEI TECHNOLOGIES CO., LTD.) 06 October 2022 (2022-10-06) entire document | 1-24 |

Form PCT/ISA/210 (second sheet) (July 2022)

**INTERNATIONAL SEARCH REPORT**
Information on patent family members

International application No.

**PCT/CN2023/114736**

| Patent document cited in search report | | | Publication date (day/month/year) | Patent family member(s) | Publication date (day/month/year) |
|---|---|---|---|---|---|
| CN | 113890695 | A | 04 January 2022 | None | |
| WO | 2022006724 | A1 | 13 January 2022 | None | |
| CN | 115529645 | A | 27 December 2022 | None | |
| CN | 111756480 | A | 09 October 2020 | None | |
| WO | 2022205023 | A1 | 06 October 2022 | None | |

Form PCT/ISA/210 (patent family annex) (July 2022)